# EUROPÄISCHE PATENTSCHRIFT

(11) **EP 3 156 662 B1**
(45) Veröffentlichungstag und Bekanntmachung des Hinweises auf die Patenterteilung: **05.06.2019**
(21) Anmeldenummer: 15189319.5
(22) Anmeldetag: 12.10.2015
(51) Int. Cl.: F04D 29/48, F04D 29/44, F04D 29/42, F04D 15/00, F16K 11/048, F24D 3/02, F24D 3/08, F24D 3/10, F24D 19/10

(54) **PUMPENAGGREGAT UND HYDRAULISCHES SYSTEM**
PUMP UNIT AND HYDRAULIC SYSTEM
POMPE ET SYSTÈME HYDRAULIQUE

(43) Veröffentlichungstag der Anmeldung: 19.04.2017
(73) Patentinhaber: Grundfos Holding A/S, 8850 Bjerringbro (DK)
(72) Erfinder: Blad, Thomas, 8850 Bjerringbro (DK); Mønster, Peter, DK-8900 Randers (DK)
(74) Vertreter: Patentanwälte Vollmann Hemmer Lindfeld Partnerschaft mbB

(56) Entgegenhaltungen:
- EP-A1- 0 394 140
- EP-A1- 0 501 109
- EP-A1- 0 924 435
- EP-A1- 1 403 521
- EP-A2- 0 460 399
- DE-U- 6 607 072
- JP-A- 2008 038 743

## Beschreibung

Die Erfindung betrifft ein Heizungs-Umwälzpumpenaggregat mit einem Ventil sowie ein hydraulisches System mit einem solchen Pumpenaggregat.

Beispielsweise aus EP 0 460 399 A2 ist ein Pumpenaggregat in Form einer Heizungsumwälzpumpe bekannt, welches ein integriertes Ventil aufweist, um die aus dem Pumpenaggregat austretende Strömung wahlweise in zwei verschiedene Ausgänge zu lenken. Das Ventil wirkt dabei in Abhängigkeit der Drehrichtung des Laufrades in dem Pumpenaggregat. Durch die in Umfangsrichtung beschleunigte Flüssigkeit wird ein Ventilelement des Ventiles in Abhängigkeit der Drehrichtung in zwei verschiedene Schaltstellungen gelenkt.

EP 1 403 521 A1 offenbart eine bidirektionale Pumpe mit einem in zwei Drehrichtungen antreibbaren Laufrad und einem von der Strömung, welche vom Laufrad verursacht wird, bewegbaren Ventilelement. Das Ventilelement ragt dazu in einen das Laufrad ringförmig umgebenden Strömungskanal hinein. Dabei verbleibt lediglich ein schmaler Spalt zwischen Laufrad und Ventilelement, welcher durch eine kontinuierliche Strömung ein sanftes Umschalten ermöglicht.

EP 0 394 140 A1 offenbart eine bidirektionale Pumpe mit einem drehend angetriebenen Laufrad und einem Ventilelement, welches über ein Antriebselement, welches in den Strömungsweg im Außenumfangsbereich des Laufrades hineinragt, antreibbar ist.

Nachteilig bei diesen bekannten bidirektionalen Pumpen ist, dass der Wirkungsgrad schwer zu optimieren ist. Wenn das Laufrad radial gerichtete Schaufeln aufweist, ist der Wirkungsgrad in beiden Drehrichtungen gleich, jedoch nicht optimal. Wenn das Laufrad, wie bei modernen Umwälzpumpen üblich, gekrümmte Schaufeln aufweist, wird dadurch der Wirkungsgrad in einer Drehrichtung verbessert, in der anderen Drehrichtung jedoch verschlechtert. So kann ein solches Pumpenaggregat nur in einer Drehrichtung einen optimalen Wirkungsgrad liefern.

Im Hinblick auf diese Problematik ist es Aufgabe der Erfindung, ein Pumpenaggregat dahingehend zu verbessern, dass in beiden Drehrichtungen ein akzeptabler Wirkungsgrad erreicht werden kann.

Diese Aufgabe wird gelöst durch ein Pumpenaggregat mit den in Anspruch 1 angegebenen Merkmalen sowie durch ein hydraulisches System mit den in Anspruch 20 angegebenen Merkmalen. Bevorzugte Ausführungsformen ergeben sich aus den Unteransprüchen, der nachfolgenden Beschreibung sowie den beigefügten Figuren.

Das erfindungsgemäße Pumpenaggregat ist ein Kreiselpumpenaggregat und weist ein Pumpengehäuse auf, in welchem ein Laufrad drehbar angeordnet ist. Das Laufrad wird durch einen mit ihm verbundenen elektrischen Antriebsmotor angetrieben. Dabei ist der elektrische Antriebsmotor so ausgebildet, dass er in zwei Drehrichtungen laufen kann. Es ist eine entsprechende Steuereinrichtung vorgesehen, welche den Antriebsmotor wahlweise in einer der beiden Drehrichtungen ansteuert. Das Pumpenaggregat weist ferner zumindest ein Ventil mit zumindest einem Ventilelement auf. Dieses Ventil kann in das Pumpengehäuse integriert sein oder direkt an dem Pumpengehäuse in einem eigenen Gehäuse angeordnet sein. Besonders bevorzugt sind ein Ventilgehäuse und das Pumpengehäuse einstückig ausgebildet, beispielsweise als Gussbauteil, insbesondere Spritzgussbauteil aus Kunststoff.

Das Ventilelement des Ventils wird durch die von dem Laufrad erzeugte Strömung bewegt. Dazu ist das Ventilelement entsprechend in dem Pumpengehäuse angeordnet, so dass es von der von dem Laufrad erzeugten Strömung beaufschlagt wird. Dabei ist das Ventilelement so angeordnet, dass es in Abhängigkeit von der Drehrichtung des Laufrades in zwei verschiedene Schaltstellungen bewegbar ist. Durch die Rotation des Laufrades in dem Pumpengehäuse wird die aus dem Laufrad radial austretende Flüssigkeit zusätzlich in Umfangsrichtung beschleunigt. Das heißt im Pumpengehäuse entsteht eine in Umfangsrichtung des Laufrades rotierende Strömung. Diese Strömung rotiert in der Drehrichtung des Laufrades. Durch Änderung der Drehrichtung des Laufrades kann somit auch die Strömungsrichtung der rotierenden Strömung geändert werden. Bei entsprechender Anordnung des Ventilelementes kann dies somit bei den unterschiedlichen Drehrichtungen unterschiedlich von der Strömung beaufschlagt werden, so dass das Ventilelement durch die verschiedenen Strömungsrichtungen wahlweise in die zwei verschiedenen Schlafstellungen bewegt werden kann.

Erfindungsgemäß sind das Pumpengehäuse und das Laufrad so ausgebildet und relativ zueinander so dimensioniert, dass bezogen auf die Drehachse des Laufrades zwischen dem Außenumfang des Laufrades und dem Pumpengehäuse ein vergleichsweise großer Freiraum ausgebildet ist. Dazu sind Pumpengehäuse und Laufrad so dimensioniert, dass ein Radius des Pumpengehäuses, d. h. des Innenumfanges des Pumpengehäuses im Umfangsbereich des Laufrades zumindest 1,4-mal und vorzugsweise zumindest 1,5- oder zumindest 2-mal so groß wie der Radius des Laufrades ist. Der Radius des Pumpengehäuses ist dabei der Abstand der Innenwandung des Pumpengehäuses von der Drehachse des Laufrades. Der dadurch gebildete Abstand bzw. Freiraum zwischen dem Außenumfang des Laufrades und der umgebenden Innenwandung des Pumpengehäuses verbessert die Strömungsführung im Inneren des Pumpengehäuses am Austritt des Laufrades. Dies gilt insbesondere dann, wenn das Laufrad für eine Drehrichtung optimiert ist. Dann wird die Wirkung des Laufrades in der entgegengesetzten Drehrichtung, für welche es nicht optimiert ist, durch den entstehenden Freiraum deutlich verbessert, so dass auch in dieser "falschen" Drehrichtung ein verbesserter Wirkungsgrad erzielt werden kann. Die Innenkontur des Pumpengehäuses muss nicht zwingend einen kreisförmigen Querschnitt haben, vielmehr kann der Radius über den Umfang variieren. Durch die erfindungsgemäße Ausgestaltung des Pumpengehäuses ist es möglich Druck-Mengen-Kurven zu erzielen, welche in beiden Drehrichtungen im Wesentlichen identisch sind.

In dem genannten Umfangsabschnitt, in welchem der Freiraum ausgebildet ist, ist der radiale Abstand zwischen dem Außenumfang des Laufrades und der gegenüberliegenden Innenwandung des Pumpengehäuses an jeder Stelle so groß, wie es sich durch die zuvor genannten Größenverhältnisse von Laufrad und Pumpengehäuse in diesem Bereich ergibt. Das heißt der Freiraum ist durch keinerlei Vorsprünge oder ähnliches gestört, so dass in diesem Bereich keine Hindernisse für die Strömung bestehen. Auch erstreckt sich kein Teil des Ventils oder Ventilelementes in diesen Freiraum hinein.

Gemäß einer bevorzugten Ausführungsform der Erfindung ist der Radius des Pumpengehäuses in dem genannten Umfangsabschnitt mindestens 2,5 oder mindestens 3 mal so groß, wie der Radius des Laufrades. Gemäß einer weiteren bevorzugten Ausführungsform ist der Radius des Pumpengehäuses in diesem Umfangsabschnitt zwischen 1,5- und 3,5-mal so groß und weiter bevorzugt zwischen 1,75- und 2,25-mal so groß wie der Radius des Laufrades. In diesen Größenverhältnissen werden besonders günstige Strömungsverhältnisse erzielt.

Der Umfangsabschnitt, in welchem ein vergrößerter Freiraum zwischen Laufrad und gegenüberliegender Innenwandung des Pumpengehäuses ausgebildet ist, über den gesamten Umfangsbereich des Laufrades, das heißt über 360° ist ein derartiger Freiraum zwischen dem Außenumfang des Laufrades und der gegenüberliegenden Innenwandung des Pumpengehäuses gemäß der vorangehenden Definitionen der Größenverhältnisse zwischen Radius des Laufrades und Radius des Pumpengehäuses gegeben. Ein solcher ringförmiger Freiraum ist im gesamten Umfang des Laufrades, in welchem auch keine Teile von Ventilelementen hinein ragen, derart ausgebildet, dass bei Rotation des Laufrades im Umfang des Laufrades ein sich drehender Wasserring bzw. Flüssigkeitsring ausgebildet werden kann. Der ringförmige Freiraum, welcher sich über den gesamten Umfang des Laufrades erstreckt, muss keine konstante Breite in radialer Richtung und keine konstante Höhe in axialer Richtung aufweisen. Diese Maße können vielmehr über den Umfang variieren. Wesentlich ist lediglich, dass der Freiraum so groß dimensioniert ist, dass sich ein um die Drehachse des Laufrades rotierender Wasserring ausbilden kann. Ein solcher rotierender Wasserring hat die Wirkung einer zweiten nachfolgenden Pumpenstufe und unterstützt die Umwandlung der durch die Geschwindigkeit der aus dem Laufrad austretenden Flüssigkeit bedingten kinetischen Energie in Druck. Der rotierende Wasserring hat somit eine ähnliche Wirkung einer Spirale im Pumpengehäuse oder eines Leitapparates im Pumpengehäuse. Aus diesem Wasserring tritt die Flüssigkeit dann in einen am Außenumfang des Pumpengehäuses angeordneten Auslass in radialer und/oder tangentialer Richtung aus. Insgesamt vollzieht die Flüssigkeit nach dem Austritt aus dem Laufrad somit eine kreis- bzw. spiralförmige Bewegung im Inneren des Pumpengehäuses. Die Ausbildung eines solchen Wasserringes unterscheidet sich somit grundsätzlich von konventionellen Kreiselpumpen, bei welchen die Ausbildung eines solchen rotierenden Wasserringes gerade verhindert werden soll. In konventionellen Kreiselpumpen ist das Pumpengehäuse im Umfang des Laufrades in der Regel so gestaltet, dass in Drehrichtung hinter dem Auslass des Pumpengehäuses ein radial nach innen gerichteter Vorsprung oder eine Zunge vorgesehen ist, welche die Rotation der Flüssigkeit über den Auslass hinaus verhindert.

In dem genannten Umfangsabschnitt, in welchem der oben beschriebene vergrößerte Freiraum zwischen dem Außenumfang des Laufrades und der gegenüberliegenden Innenwandung des Pumpengehäuses gegeben ist, hat dieser Freiraum in axialer Richtung parallel zur Drehachse des Laufrades vorzugsweise eine Höhe, welche zumindest der Höhe der Austrittsöffnungen am Außenumfang des Laufrades in dieser Richtung entspricht. So kann die Höhe beispielsweise mindestens zwischen 3 und 6 mm liegen. Wenn auf diese Weise ein Ringraum im Umfang des Laufrades ausgebildet ist, so weist dieser Ringraum vorzugsweise über den gesamten Umfang eine solche Höhe in axialer Richtung auf. Wenn nur kleinere Umfangsabschnitte in der beschriebenen Weise in radialer Richtung verbreitert ausgebildet sind, ist es möglich, dass die in radialer Richtung schmaler ausgebildeten Umfangsabschnitte eine größere Höhe in axialer Richtung parallel zur Drehachse des Laufrades haben.

Das Laufrad ist vorzugsweise so dimensioniert, dass es einen Durchmesser zwischen 25 und 60 mm aufweist, wobei der Einlauf-Durchmesser bzw. Saugmund-Durchmesser vorzugsweise zwischen 12 und 30 mm liegt. Dies bedeutet, dass es sich vorzugsweise bei dem Laufrad um ein im Durchmesser relativ kleines Laufrad handelt. Bevorzugt wird ein solches Laufrad von dem elektrischen Antriebsmotor in zumindest einer, vorzugsweise in beiden Drehrichtungen mit einer relativ hohen Betriebsdrehzahl angetrieben, welche bevorzugt größer als 3.000, weiter bevorzugt größer als 5.000 Umdrehungen pro Minute ist. So kann die Drehzahl beispielsweise im Bereich zwischen 3.000 und 7.000 Umdrehungen pro Minute liegen und gegebenenfalls in diesem Bereich durch Drehzahlregelung zur Regelung des Pumpenaggregates variiert werden. Vorzugsweise ist das Pumpenaggregat ferner so ausgebildet, dass das erzielte Druck-Mengen-Verhältnis größer als 3/1, weiter bevorzugt größer 4/1 oder größer 5/1 ist. Das Druck-Mengen-Verhältnis kann bis zu 8/1 oder mehr betragen. Das genannte Druck-Mengen-Verhältnis basiert auf einem als Förderhöhe in Metern angegebenen Druck und einer Menge in Form des Durchflusses in Kubikmetern pro Stunde. Zusammen mit der genannten Betriebsdrehzahl kann so vorzugsweise eine spezifische Drehzahl n_{q} zwischen 20 und 40, gegebenenfalls auch größer 40 erreicht werden.

Wie oben beschrieben, ist das Laufrad in eine Drehrichtung optimiert. So hat das Laufrad gekrümmte, weiter bevorzugt in zwei Richtungen gekrümmte Schaufeln. So können die Schaufeln des Laufrades zum einen in Umfangsrichtung zum anderen zusätzlich auch in axialer Richtung gekrümmt sein, um den Strömungsverlauf durch das Laufrad zu optimieren. Vorzugsweise sind die Schaufeln so gekrümmt, dass sie einer bevorzugten Drehrichtung angepasst sind. Diese bevorzugte Drehrichtung ist vorzugsweise diejenige Drehrichtung, in welcher das Laufrad überwiegend betrieben wird, das heißt die meisten Betriebsstunden absolviert. So sind die Schaufeln in Umfangsrichtung vorzugsweise entgegen der bevorzugten Drehrichtung gekrümmt. Wenn das Laufrad in dieser bevorzugten Drehrichtung, welche bevorzugt die Drehrichtung ist, in welcher das Laufrad überwiegend betrieben wird, gedreht wird, wird so ein besonders hoher Wirkungsgrad erreicht. In der entgegengesetzten Drehrichtung weisen die Schaufeln dann eine für diese Drehrichtung "falsche" bzw. ungünstigerer Krümmung auf. Durch den erfindungsgemäßen vergrößerten Freiraum zwischen Laufrad und Pumpengehäuse wird jedoch auch dann immer noch ein akzeptabler Wirkungsgrad erreicht, so dass auch ein Laufrad mit so gekrümmten Schaufeln in zwei Drehrichtungen betrieben werden kann.

Gemäß der erfindungsgemäßen bevorzugten Ausgestaltung kann ein so ausgebildetes Pumpenaggregat in derjenigen Drehrichtung, für welche das Laufrad optimiert ist, einen Energie-Effizienz-Index (EEI) erreichen, welcher deutlich unter der in Europa geforderten Norm von 0,23 liegt. Wenn nun dies die überwiegende Drehrichtung ist, kann auf diese Weise ein etwas schlechterer Energie-Effizienz-Index zu entgegengesetzter Drehrichtung bei Gewichtung mit der Laufzeit in beiden Drehrichtungen kompensiert werden, so dass insgesamt gewichtet nach der Laufzeit noch ein Energie-Effizienz-Index unter 0,23 erreicht werden kann. Dies lässt sich insbesondere dann erreichen, wenn das erfindungsgemäße Heizungs-Umwälzpumpenaggregat in einer Heizungsanlage derart eingesetzt wird, dass es in der bevorzugten Drehrichtung das Heizmedium zur Erwärmung eines Gebäudes durch die Heizkörper des Gebäudes fördert und in der entgegengesetzten zweiten Drehrichtung das Heizmedium zur Erwärmung von Brauchwasser durch einen Wärmetauscher fördert. Die Brauchwassererwärmung macht in Gebäuden üblicherweise nur einen sehr kleinen Anteil der Betriebsdauer des Pumpenaggregates aus.

Gemäß einer weiter bevorzugten Ausführungsform weist das Ventil zumindest eine im Umfangsbereich des Laufrades gelegene Anströmfläche auf, vorzugsweise zwei einander abgewandte im Umfangsbereich des Laufrades gelegene Anströmflächen auf, welche derart angeordnet ist/sind, dass das Ventilelement durch eine an der Strömfläche angreifende von dem Laufrad erzeugte Strömungskraft bewegbar ist. Die von dem Laufrad erzeugte Strömung wirkt auf die Anströmfläche und erzeugt an dieser eine Kraft, welche das Ventilelement in eine gewünschte Schaltstellung bewegt. Die Anströmfläche kann direkt am Ventilelement selber ausgebildet sein oder aber an einem Antriebselement ausgebildet sein, welches mit dem Ventilelement zu dessen Bewegung in geeigneter Weise gekoppelt ist. Besonders bevorzugt sind zwei Anströmflächen an zwei entgegengesetzten Seiten einer beweglichen Klappe ausgebildet. Diese kann beispielsweise so angeordnet sein, dass die Oberflächen sich im Wesentlichen radial zu dem Laufrad erstrecken. Je nach Drehrichtung des Laufrades wirkt die erzeugte rotierende Strömung im Umfang des Laufrades so wahlweise auf eine der Flächen der Klappe und bewegt diese in die Wirkungsrichtung der Strömung.

Die Anströmflächen sind so angeordnet, dass sie außerhalb des oben beschriebenen ringförmigen Freiraumes zwischen Laufrad und Pumpengehäuse gelegen sind, so dass sie die Strömung im Umfang des Laufrades nicht stören. So ist die zumindest eine Anströmfläche derart radial beabstandet zum Außenumfang des Laufrades angeordnet, dass ein dem Laufrad zugewandter Endbereich der Anströmfläche vom Außenumfang des Laufrades um ein Maß beabstandet ist, welches mindestens dem radialen Abstand zwischen dem Außenumfang des Laufrades und dem Innendurchmesser des Pumpengehäuses in dem gesamten Umfang, in welchem das oben genannte Radiusverhältnis zwischen Pumpengehäuse und Laufrad gilt, entspricht. Da das Pumpengehäuse über den gesamten Umfang in entsprechender Weise erweitert ausgebildet ist, insbesondere gemäß der oben genannten Definitionen des Radius-Verhältnisses zwischen Pumpengehäuse und Laufrad, ragt so die zumindest eine Anströmfläche nicht in den zwischen Laufrad und Pumpengehäuse geschaffenen ringförmigen Freiraum hinein.

Um dies zu erreichen, weist das Pumpengehäuse bevorzugt in einem Abschnitt eine in radialer Richtung gerichtete Erweiterung oder Ausnehmung auf, in welcher die Anströmfläche und/oder das Ventilelement gelegen ist. Diese Erweiterung bildet vorzugsweise gleichzeitig einen Auslassraum mit dem Auslass des Pumpengehäuses.

Weiter bevorzugt weist das Pumpengehäuse zwei Auslasskanäle auf, und das Ventil ist als Umschaltventil zwischen den beiden Auslasskanälen ausgebildet. Bei dieser Anordnung liegt das Ventil somit auf der Druckseite des Pumpenaggregates, so dass die von dem Laufrad erzeugte Strömung vorzugsweise direkt auf das Ventilelement bzw. an dem Ventilelement ausgebildete Anströmflächen wirken kann.

Die beiden Auslasskanäle können von einem gemeinsamen Auslassraum in dem Pumpengehäuse abzweigen, so dass ihre Öffnungen am Pumpengehäuse benachbart oder im selben Umfangsbereich des Pumpengehäuses liegen. Alternativ ist es möglich, die Auslasskanäle auch beabstandet voneinander an verschiedenen Winkelpositionen des Pumpengehäuses anzuordnen. So können die beiden Auslasskanäle beispielsweise an zwei diametral gegenüberliegenden Positionen vom Innenumfang des Pumpengehäuses abzweigen.

Weiter bevorzugt weist das Pumpengehäuse in zumindest einem Umfangsabschnitt einen gegenüber dem Innendurchmesser radial nach außen erweiterten Auslassraum auf, von welchem zumindest ein vorzugsweise beide Auslasskanäle abzweigen. Wenn die beiden Auslasskanäle an unterschiedlichen Winkelpositionen liegen, können zwei derartig erweiterte Auslassräume vorhanden sein. In einem solchen Auslassraum kann das Ventilelement zum Absperren des zugehörigen Auslasskanals gelegen sein, ohne dass dieses in den oben beschriebenen ringförmigen Freiraum zwischen dem Pumpengehäuse und dem Laufrad hinein ragt. Der oder die Auslassräume sind vorzugsweise so ausgebildet, dass sie sich radial nach außen verjüngen, das heißt an ihrer Einmündung zum Inneren des Pumpengehäuses im Umfang des Laufrades in Umfangsrichtung erweitert sind. So kann die in Umfangsrichtung bzw. tangential zum Laufrad verlaufende Strömung günstig in den Auslassraum eintreten.

Gemäß einer weiteren bevorzugten Ausführungsform weisen die beiden Auslasskanäle jeweils eine dem Innenraum des Pumpengehäuses zugewandte Eintrittsöffnung auf, durch welche die von dem Laufrad geförderte Flüssigkeit in den Auslasskanal eintritt. Das Ventil weist vorzugsweise zumindest ein bewegliches Ventilelement auf, wobei in einer ersten Schaltstellung des Ventils die Eintrittsöffnung des ersten Auslasskanals und in einer zweiten Schaltstellung des Ventils die Eintrittsöffnung des zweiten Auslasskanals von einem Ventilelement verschlossen ist. Wenn nur ein Ventilelement vorhanden ist, so kann dieses je nach Strömungsrichtung, welche sich durch die unterschiedlichen Drehrichtungen des Laufrades ergibt, wahlweise die eine Austrittsöffnung oder die andere Austrittsöffnung verschließen. Es ist jedoch auch möglich, dass zwei Ventilelemente vorhanden sind, wobei an jeder Eintrittsöffnung eines dieser Ventilelemente angeordnet ist. In diesem Fall sind die Eintrittsöffnungen und die Ventilelemente so angeordnet, dass in einer ersten Drehrichtung des Laufrades die Strömung nur auf das eine Ventilelement so wirkt, dass dieses die zugehörige Eintrittsöffnung verschließt, während das andere Ventilelement in einer geöffneten Stellung verbleibt. Wird die Drehrichtung geändert, ändert sich wie oben beschrieben auch die Strömungsrichtung und es wird entsprechend das andere Ventilelement gegen die benachbarte Eintrittsöffnung zu deren Verschluss bewegt, während die zuvor verschlossene Eintrittsöffnung freigegeben wird.

Weiter bevorzugt ist das Ventilelement um eine Schwenkachse und/oder einen Biegebereich zwischen den beiden Schaltstellungen schwenkbar, wobei die Schwenkachse bzw. der Biegebereich sich vorzugsweise parallel zu einer Drehachse des Laufrades erstreckt. Dies bedeutet die Schwenk- bzw. Biegebewegung vollzieht sich in einer Ebene quer, insbesondere normal zur Drehachse des Laufrades. Das Ventilelement kann zu seiner Bewegung gelenkig bzw. drehbar an einer Schwenkachse gelagert sein. Alternativ oder zusätzlich kann das Ventilelement auch biegbar, insbesondere elastisch biegbar ausgebildet werden, so dass es alternativ oder zusätzlich eine Schwenkbewegung um den Biegebereich vollzieht. Die Anordnung der Biegebereiche bzw. Schwenkachsen parallel zu Drehachse des Laufrades hat den Vorteil, dass, wenn die Anströmflächen direkt am Ventilelement selber ausgebildet werden, dieses direkt von der in Umfangsrichtung bzw. tangential zum Laufrad verlaufenden Strömung beaufschlagt werden kann. Bevorzugt wird ein solches Ventilelement so angeordnet, dass es sich in Ruhelage im Wesentlichen in radialer Richtung, das heißt mit seiner Mittelachse in radialer Richtung zu dem Laufrad erstreckt. Je nach Strömungsrichtung kann ein solches Ventilelement aus dieser Ruhelage in die eine oder andere Umfangsrichtung ausgelenkt werden.

Die Schwenkachse und/oder der Biegebereich können an einem dem Laufrad abgewandten oder einem dem Laufrad zugewandten Bereichs des Ventilelementes gelegen sein. So kann das Ventilelement vorzugsweise radial innen oder radial außen bezogen auf die Drehachse des Laufrades festgelegt sein. Gemäß einer besonderen Ausführungsform kann das Ventilelement auch an zwei Enden, das heißt radial innen und radial außen festgelegt sein und sich in dem Zwischenbereich elastisch verformen bzw. verbiegen, um die eine oder die andere Einlassöffnung der Auslasskanäle zu verschließen.

Gemäß einer weiter bevorzugten Ausführungsform kann das Ventilelement eine im Querschnitt kreissektorförmige Gestalt, das heißt "Tortenstück-förmige" Gestalt aufweisen, wobei sich eine bogenförmige Außenfläche des Ventilelementes, welche eine Dichtfläche des Ventilelementes bildet, konzentrisch zu einer Schwenk- und/oder Biegeachse des Ventilelementes erstreckt und zwei einander abgewandte in Radiusrichtung, bezogen auf die Schwenkachse des Ventilelementes, verlaufende Seitenflächen des Ventilelementes die Anströmflächen bilden, auf welche die von dem Laufrad erzeugte Strömung wirkt. Auch bei diesem Ventilelement erstreckt sich die Schwenk- und/oder Biegeachse vorzugsweise parallel zur Drehachse des Laufrades und ist an dem spitzen Ende des so geformten Ventilelementes gelegen. Die bogenförmige Dichtfläche bewegt sich beim Verschwenken vorzugsweise parallel zu einer gegenüberliegenden Wandung des Pumpengehäuses, in welchem die Eintrittsöffnungen der beiden Auslasskanäle gelegen sind. Je nach Schwenk- bzw. Winkellage des Ventilelementes kann so der eine oder der andere Auslasskanal verschlossen werden, indem die bogenförmige Dichtfläche die Einlassöffnung überdeckt.

Gemäß einer alternativen Ausführungsform der Erfindung kann das Ventil auch an der Saugseite des Pumpenaggregates angeordnet sein. So kann das Pumpenaggregat zwei Einlasskanäle aufweisen und das Ventil kann als Umschaltventil zwischen den beiden Einlasskanälen ausgebildet sein. Das Pumpenaggregat saugt je nach Schaltstellung des Ventiles wahlweise aus einem ersten oder einem zweiten Einlasskanal die Flüssigkeit an.

Dabei ist das Ventilelement vorzugsweise zu seiner Bewegung mit einem Antriebselement gekoppelt, an welchem zumindest eine Anströmfläche ausgebildet ist. Das Antriebselement kann im Inneren des Pumpengehäuses in der vorangehend beschriebenen Weise angeordnet werden, so dass die von dem Laufrad erzeugte Strömung auf die Anströmfläche des Antriebselementes wirkt. Dabei kann das Antriebselement vorzugsweise so ausgebildet sein wie das oben beschriebene Ventilelement und in entsprechender Weise verschwenken. Die Schwenkbewegung wird durch eine Kopplung auf das dann außerhalb des Pumpengehäuses angeordnete Ventilelement übertragen. Ein solches Ventilelement kann in einem Ventilgehäuse angeordnet sein, welches vom Druckraum des Pumpenaggregates, in welchem das Laufrad rotiert, getrennt ist. Das Ventilgehäuse ist jedoch vorzugsweise einstückig mit dem Pumpengehäuse ausgebildet.

Weiter bevorzugt ist das Ventil derart ausgebildet, dass das zumindest eine Ventilelement an beiden Einlasskanälen jeweils in Strömungsrichtung des jeweiligen Einlasskanals schließt. Diese Anordnung hat den Vorteil, dass eine Selbsthalte-Funktion durch den in dem Einlasskanal herrschenden Druck erreicht wird. Wenn es sich bei dem Heizungs-Umwälzpumpenaggregat um ein Umwälzpumpenaggregat handelt, welches in einem Kreislauf bzw. in zwei Kreisläufen angeordnet ist, so hat dieser Kreislauf zwei Zweige, welche an der Druckseite des Pumpenaggregates voneinander abzweigen und jeweils in einem der beiden Einlasskanäle münden. Bei einer solchen Anordnung wird der ausgangsseitig des Pumpenaggregates herrschende Druck auch in den verschlossenen Einlasskanal übertragen. Wenn das Ventilelement so angeordnet ist, dass es sich in Strömungsrichtung in dem Einlasskanal in seine geschlossene Schaltstellung bewegt, drückt so der in dem Einlasskanal herrschende Druck das Ventilelement in die geschlossene Schaltstellung, so dass sich das Ventilelement, solange das Pumpenaggregat in Betrieb ist, selbsttätig in seiner geschlossenen Position hält.

Das Ventilelement weist vorzugsweise eine Ruhelage auf, welche bevorzugt zwischen den beiden Schaltstellungen gelegen ist. Das Ventilelement bewegt sich dann bei Inbetriebnahme des Pumpenaggregates entweder durch direkte Anströmung oder durch Anströmung eines mit dem Ventilelement verbundenen Antriebselement abhängig von der Drehrichtung des Laufrades aus der Ruhelage in eine der beiden Schaltstellungen. Bevorzugt kann das Ventilelement mit einem Rückstellmittel versehen sein, welches auf das Ventilelement eine in die Ruhelage gerichtete Rückstellkraft ausübt. Diese Rückstellkraft ist die von der Strömung erzeugten Kraft entgegengerichtet und muss von der Strömung zur Bewegung des Ventilelementes überwunden werden. Fällt die Strömungskraft beim Abschalten des Pumpenaggregates weg, wird das Ventilelement durch die Rückstellkraft wieder in seine Ruhelage bewegt. Die Rückstellkraft kann beispielsweise durch ein Federelement oder durch elastische Rückstellkräfte im Ventilelement selber erzeugt werden. So kann als Rückstellmittel auch ein elastisch verformbares Ventilelement oder Antriebselement dienen. Das Ventilelement kann derart elastisch ausgebildet sein, dass es durch elastische Verformung bei Bewegung in zumindest einer der beiden Schaltstellungen die Rückstellkraft erzeugt und sich bei Wegfall der Strömungskraft selbsttätig wieder in seine Ruhelage bewegt.

Bei dem beschriebenen Pumpenaggregat handelt es sich um ein Heizungs-Umwälzpumpenaggregat. Ein solches Heizungs-Umwälzpumpenaggregat kann weiter bevorzugt mit einem nasslaufenden elektrischen Antriebsmotor versehen sein. Besonders bevorzugt wird das Pumpenaggregat, wie oben beschrieben, in einer Heizungsanlage, insbesondere einer Kompaktheizungsanlage eingesetzt, wobei das Ventil als Umschaltventil ausgebildet ist, um den Strömungsweg für das Heizmedium bzw. Heizwasser wahlweise durch einen Heizkreis im Gebäude oder durch einen Wärmetauscher für zu erwärmendes Brauchwasser zu leiten.

Gegenstand der Erfindung ist ferner ein hydraulisches System, insbesondere in Form einer Heizungsanlage, wie sie vorangehend beschrieben wurde, mit zumindest zwei hydraulischen Kreisen, wobei ein Heizungs-Umwälzpumpenaggregat gemäß der obigen Beschreibung in dem hydraulischen System angeordnet ist und das Ventil des Pumpenaggregates als Umschaltventil ausgebildet ist, mittels welchem der Strömungsweg für eine von dem Pumpenaggregat geförderte Flüssigkeit zwischen den beiden hydraulischen Kreisen umschaltbar ist. So kann beispielsweise zwischen dem Kreis durch einen Wärmetauscher zur Erwärmung von Brauchwasser und einem Heizkreis in einem Gebäude umgeschaltet werden.

Nachfolgend wird die Erfindung beispielhaft anhand der beigefügten Figuren beschrieben. In diesen zeigt:
- Fig. 1: schematisch ein hydraulisches System gemäß der Erfindung mit einem ersten Einbauort des Pumpenaggregates,
- Fig. 2: eine teilweise geschnittene Ansicht eines Pumpenaggregates gemäß einer ersten Ausführungsform der Erfindung,
- Fig.3: eine Schnittansicht des Pumpenaggregates gemäß Fig. 2 entlang der Linie III-III in Fig. 2, wobei sich ein Ventil in dem Pumpenaggregat in der Ruhelage befindet,
- Fig.4: eine Schnittansicht gemäß Fig. 3, wobei sich das Ventil in einer ersten Schaltstellung befindet,
- Fig. 5: eine Schnittansicht gemäß Fig. 3 und 4, wobei sich das Ventil in einer zweiten Schaltstellung befindet,
- Fig. 6: eine Explosionsansicht des Pumpenaggregates gemäß Fig. 2 bis 5,
- Fig.7: eine Schnittansicht eines Pumpenaggregates gemäß einer zweiten Ausführungsform der Erfindung,
- Fig. 8: eine Explosionsansicht des Pumpenaggregates gemäß Fig. 7,
- Fig. 9: eine Schnittansicht entlang der Linie IX-IX in Fig. 7, wobei sich das Antriebselement in der Ruhelage befindet,
- Fig. 10: eine Schnittansicht entlang der Linie X-X in Fig. 7, wobei sich das Ventilelement in einer Ruhelage befindet,
- Fig. 11: eine Ansicht gemäß Fig. 10, wobei sich das Ventilelement in einer ersten Schaltstellung befindet,
- Fig. 12: eine Ansicht gemäß Fig. 10 und 11, wobei sich das Ventilelement in einer zweiten Schaltstellung befindet,
- Fig. 13: schematisch ein hydraulisches System mit einer zweiten möglichen Anordnung des Pumpenaggregates,
- Fig. 14: eine teilweise geschnittene Ansicht eines Pumpenaggregates gemäß einer dritten Ausführungsform der Erfindung, wobei sich ein Ventilelement in einer Ruhelage befindet,
- Fig. 15: eine Ansicht gemäß Fig. 14 mit dem Ventilelement in einer ersten Schaltstellung,
- Fig. 16: eine Schnittansicht gemäß Fig. 14 und 15 mit dem Ventilelement in einer zweiten Schaltstellung,
- Fig. 17: eine Schnittansicht eines Pumpenaggregates gemäß einer vierten Ausführungsform der Erfindung,
- Fig. 18: eine Schnittansicht eines Pumpenaggregates gemäß einer fünften Ausführungsform der Erfindung, wobei sich ein Ventilelement in einer ersten Schaltstellung befindet,
- Fig. 19: eine Ansicht gemäß Fig. 18, wobei sich das Ventilelement in einer zweiten Schaltstellung befindet,
- Fig.20: eine Schnittansicht eines Pumpenaggregates gemäß einer achten Ausführungsform der Erfindung und
- Fig.21: eine Schnittansicht des Pumpengehäuses gemäß Fig. 20 entlang der Linie XXI-XXI in Fig. 20.

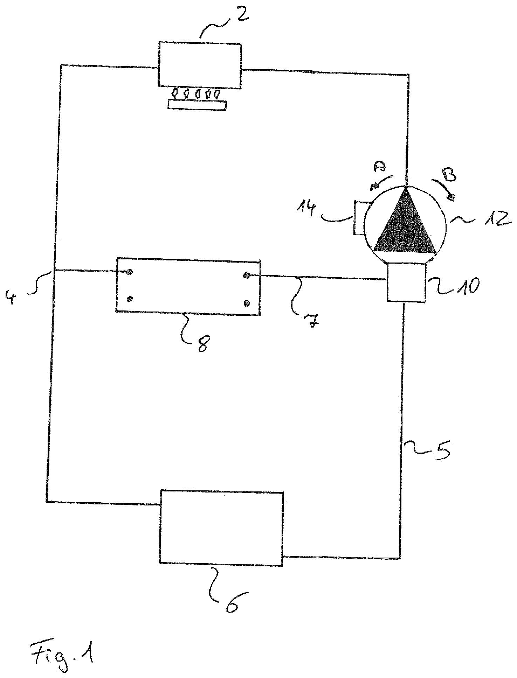

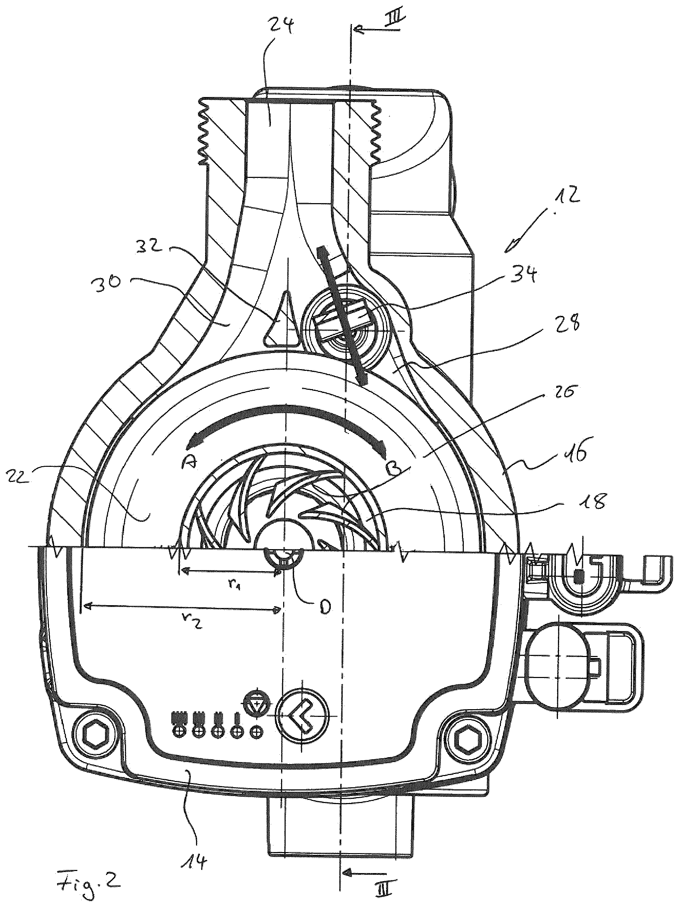

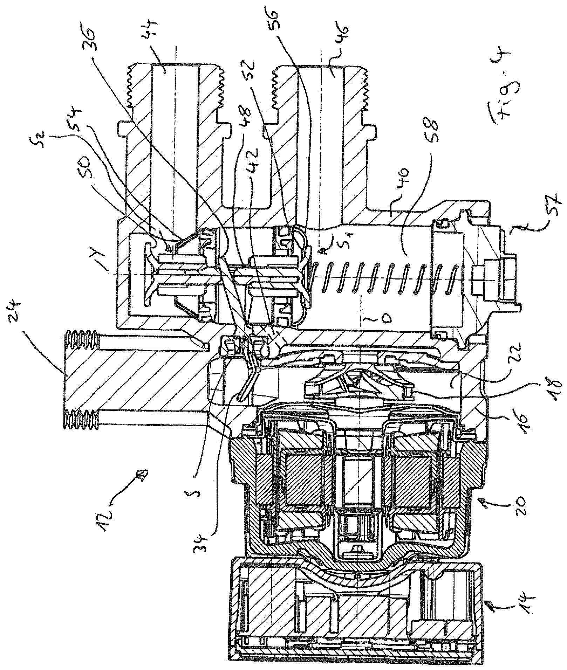

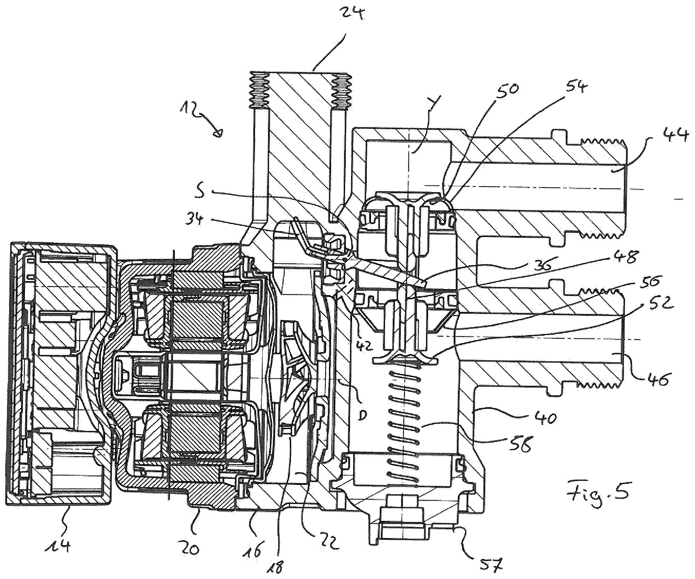

Fig. 1 zeigt ein hydraulisches System, in welchem ein Pumpenaggregat gemäß der Fig. 2 bis 20 zum Einsatz kommen kann. Bei diesem hydraulischen System handelt es sich um eine Heizungsanlage mit zwei hydraulischen Kreisen. Das hydraulische System weist einen Primärwärmetauscher 2 auf, welcher beispielsweise durch einen Brenner wie ein Gas- oder Ölbrenner beheizt wird. Bei dem Primärwärmetauscher 2 handelt es sich somit beispielsweise um einen Heizkessel, es kann sich jedoch auch um einen anderen geeigneten Wärmeerzeuger handeln. In Strömungsrichtung hinter dem Primärwärmetauscher 2 gelegen ist ein Abzweigpunkt 4, an welchem sich der Kreislauf in zwei Zweige bzw. Kreise aufteilt. Ein erster Kreis 5 verläuft durch ein Gebäude zur Raumheizung und ist in diesem Beispiel durch einen Heizkörper 6 symbolisiert. Es ist zu verstehen, dass dieser Heizkreis 5 mehr als einen Heizkörper 6 oder auch andere Heizleitungen aufweisen kann. Der zweite hydraulische Kreis 7 verläuft durch einen Sekundärwärmetauscher 8, welcher zur Erwärmung von Brauchwasser dient. Der Heizkreis 5 und der zweite Kreis 7 münden in ein Ventil 10, welches Teil des Pumpenaggregates 12 ist. Das Pumpenaggregat 12 dient dazu, Wasser durch die beiden Kreise 5 und 7 zu fördern, wobei je nach Schaltstellung des als Umschaltventil ausgebildeten Ventils 10 nur einer der Kreise 5 und 7 geöffnet ist, während der andere Kreis geschlossen ist. Das heißt bei Betrieb des Pumpenaggregates 12 wird das von dem Primärwärmetauscher 2 erwärmte Wasser je nach Ventilstellung entweder durch den Sekundärwärmetauscher 8 oder durch die Heizkörper 6 gefördert. Wesentlich ist, dass über den Abzweigpunkt 4 auch in dem jeweils von dem Ventil 10 verschlossenen Kreis der ausgangsseitige Druck des Pumpenaggregates 12 anliegt. Bei dem Pumpenaggregat 12 handelt es sich um ein Pumpenaggregat, welches über einen elektrischen Antriebsmotor in zwei Drehrichtungen betrieben werden kann. Die Drehrichtung wird von einer Steuereinrichtung 14, welche in das Pumpenaggregat 12 integriert ist, eingestellt. Die Steuereinrichtung 14 steuert den elektrischen Antriebsmotor an.

Anhand der Fig. 2 bis 6 wird ein erstes Ausführungsbeispiel für das Pumpenaggregat 12 mit dem Ventil 10 beschrieben. Fig. 2 zeigt das Pumpengehäuse 16 teilweise geschnitten. In dem nicht geschnittenen Bereich ist eine Draufsicht auf das Elektronikgehäuse, welches die Steuereinrichtung 14 beherbergt, zu sehen. Im Inneren des Pumpengehäuses 16 ist ein Laufrad 18 gelegen. Dieses wird von dem elektrischen Antriebsmotor 20 um die Drehachse D drehend angetrieben. Dabei kann das Laufrad wahlweise in den Drehrichtungen A und B angetrieben werden. Das Laufrad 18 hat einen Radius r₁, während der Innendurchmesser des Pumpengehäuses 16 im Umfangsbereich des Laufrades 18 einen Durchmesser r₂ hat. Es ist zu erkennen, dass der Innendurchmesser r₂ des Pumpengehäuses 16 deutlich größer als der Außendurchmesser r₁ des Laufrades ist. Im gezeigten Beispiel ist der Radius des Pumpengehäuses r₂ ungefähr doppelt so groß wie der Radius r₁ des Laufrades 18. Auf diese Weise wird ein Freiraum in Form eines Ringraumes 22 im Umfangsbereich des Laufrades 18 geschaffen, in welchem sich bei Rotation des Laufrades 18 ein rotierender Wasserring ausbildet, welcher sich während der Rotation in radialer Richtung vergrößert, bis die Strömung in den Auslasskanal 24 eintritt. Der rotierende Wasserring begünstigt dabei die Umsetzung von Strömungsenergie, das heißt Geschwindigkeit der aus dem Laufrad 18 austretenden Flüssigkeit in Druck.

Das Laufrad 18 weist gekrümmte Schaufeln 26 auf, welche sowohl in Richtung der Drehachse D als auch in Umfangsrichtung gekrümmt sind. In diesem Fall sind die Schaufeln 26 so gekrümmt, dass sie auf die Drehrichtung A hin optimiert sind. Das heißt das Laufrad wird bei Drehung in der Richtung A den optimalen Wirkungsgrad erzielen. Aufgrund des freien Ringraumes 22 erzielt das Laufrad aber auch in der Drehrichtung B, trotz der für diese Drehrichtung nicht richtig gekrümmten Schaufeln 26, einen akzeptablen Wirkungsgrad.

Der Auslasskanal 24 weist angrenzend an den Innenraum des Pumpengehäuses 16 zwei Auslasskanalabschnitte 28 und 30 auf. Die Auslasskanalabschnitte 28 und 30 sind durch ein im Querschnitt dreieckiges Trennelement 32 bzw. eine Trennwand 32 voneinander getrennt. Stromabwärts des Trennelementes 32 vereinigen sich die Auslasskanalabschnitte 28 und 30 zu dem Auslasskanal 24. Wenn das Laufrad 18 in der Drehrichtung A rotiert, wird die Flüssigkeit bzw. das Wasser im Außenumfangsbereich des Laufrades 18 in dem Ringraum 22 ebenfalls in der Richtung A rotieren und so in tangentialer Richtung in den Auslasskanalabschnitt 28 eintreten, während in den Auslasskanalabschnitt 30 deutlich weniger Wasser eintreten wird. Wird das Laufrad 18 in umgekehrter Drehrichtung B betrieben, rotiert auch die Flüssigkeit in dem Ringraum 22 in der Drehrichtung B, so dass die Flüssigkeit dann bevorzugt in den Auslasskanalabschnitt 30 eintritt.

In dem Auslasskanalabschnitt 28 ist ein Antriebselement in Form einer schwenkbaren Klappe 34 angeordnet. Die Klappe ist an einem Hebel 36 befestigt, welcher sich durch eine Dichtung 38 hindurch aus dem Inneren des Pumpengehäuses 16 hinaus in das Innere eines Ventilgehäuses 40 hinein erstreckt.

Das Ventilgehäuse 40 ist an der Saugseite des Pumpenaggregates 12 angeordnet und beherbergt das Ventil 10. Das Innere des Ventilgehäuses 40 ist über eine nur schematisch angedeutete Verbindung 42 mit einem Saugraum und damit dem Saugmund des Laufrades 18 in Verbindung. Das Ventilgehäuse 40 weist zwei Einlasskanäle 44 und 46 auf, wobei der Einlasskanal 44 mit dem Heizkreis 5 und der Einlasskanal 46 mit dem zweiten Kreis 7 durch den Sekundärwärmetauscher 8 verbunden wird.

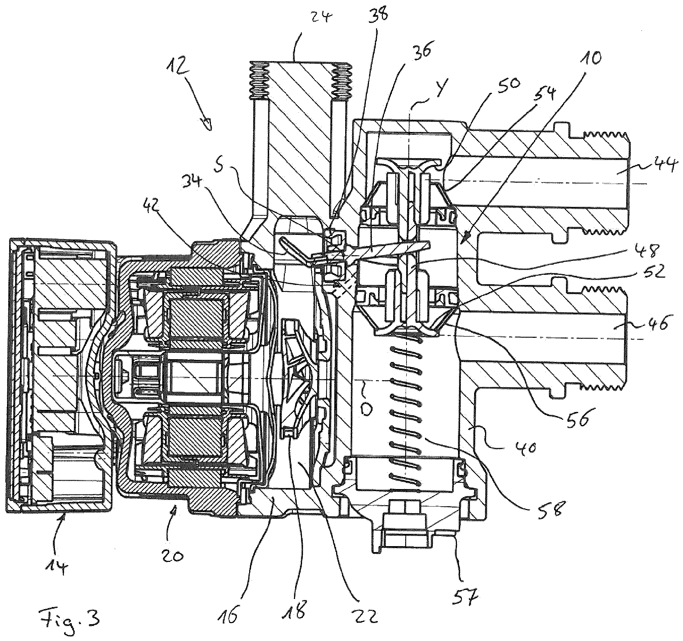

Das Ventil weist ein linear bewegliches Ventilelement 48 auf, wobei der Hebel 36 mit dem Ventilelement 48 so in Eingriff ist, dass durch eine Schwenkbewegung des Hebels 36 um eine Schwenkachse S das Ventilelement 48 entlang der Achse Y linear verschoben wird. Das Ventilelement 48 weist an seinen Axialenden zwei einander zugewandte Dichtflächen 50 und 52 auf. Den Dichtflächen 50 und 52 zugewandt sind Ventilsitze 54 und 56. Dabei mündet der erste Einlasskanal 44 an den ersten Ventilsitz 54 und der zweite Einlasskanal 46 an dem zweiten Ventilsitz 56. Die Dichtfläche 50 kann mit dem Ventilsitz 54 in dichtende Anlage treten, während die Dichtfläche 52 mit dem Ventilsitz 56 in dichtende Anlage treten kann, wie in Fig. 3 gezeigt ist. Die Dichtflächen 50, 52 sind über das Ventilelement 48 fest miteinander verbunden, so dass, wenn eine der Dichtflächen 50, 52 an ihrem zugehörigen Ventilsitz 54, 56 anliegt, die jeweils andere Dichtfläche 52, 50 von ihrem Ventilsitz 56, 54 abgehoben ist. So steht jeweils nur einer der Einlasskanäle 44 und 46 über die Verbindung 42 mit dem Saugmund des Laufrades 18 in fluidleitender Verbindung.

Fig. 3 zeigt die Ruhelage des Ventils 48, welche durch eine Rückstellfeder 58 gehalten wird. Diese Ruhelage ist die Position des Ventilelementes 58 bei Stillstand des Pumpenaggregates. In dieser Lage ist der zweite Kreis 7 durch den Sekundärwärmetauscher 8 geschlossen, da der Einlasskanal 46 geschlossen ist. Wird aus dieser Ruhelage heraus der Antriebsmotor 20 durch entsprechende Ansteuerung über die Steuereinrichtung 14 so in Betrieb genommen, dass das Laufrad 18 in der Drehrichtung B rotiert, wird die rotierende Strömung in dem Ringraum 22 in erster Linie in den Auslasskanalabschnitt 30 gelenkt, so dass auf die Klappe 34 nur eine geringe Strömungskraft wirkt, welche nicht ausreicht, dass die Klappe 34 den Hebel 36 verschwenkt, um das Ventilelement 48 zu bewegen. So wird das Wasser über den Auslasskanalabschnitt 30 in den Auslasskanal 34 gefördert und strömt durch den Heizkreis 5 in den Einlasskanal 34. Von dort strömt es durch den geöffneten Ventilsitz 54, über die Verbindung 42 in den Saugmund des Laufrades 18. Gleichzeitig wird der ausgangsseitige Druck des Pumpenaggregates 12 über den nun geschlossenen zweiten Kreis 7 auch in den Einlasskanal 46 übertragen. Dort wirkt der Druck auf die Stirnseite des Ventilelementes 48, das heißt die Rückseite der Dichtfläche 52. Da der Ventilsitz 56 elastisch ausgebildet ist, wird er dabei um ein gewisses Maß gegenüber der Ruhelage verformt, so dass sich das Ventilelement 48 noch um ein bestimmtes Maß verschieben kann. Der auf die Rückseite der Dichtfläche 52 durch den Einlasskanal 46 wirkende Druck hält während des Betriebs des Pumpenaggregates das Ventilelement 48 so sicher in der gezeigten ersten Schaltstellung, welche dazu dient, das Heizwasser durch den Heizkreis 5 zu leiten.

Dafür wesentlich ist, dass das Ventilelement so ausgebildet ist, dass es zum Schließen des Einlasskanales 46 in der Strömungsrichtung S₁ zu dem Dichtsitz 50 hin bewegt werden muss. Umgekehrt wird die Dichtfläche 50 in der Strömungsrichtung S₂ durch den Einlasskanal 44 zu dem Ventilsitz 54 hin bewegt, um den Ventilsitz 54 zu verschließen. Das Ventilelement 48 erstreckt sich durch die Ventilsitze 54 und 56 bzw. die in den von den Ventilsitzen 54 und 65 umschlossenen Öffnungen hindurch, so dass die Dichtflächen 50 und 52 einander zugewandt sind, während die Ventilsitze 54 und 56 einander abgewandt sind.

Wird der Antriebsmotor 20 in umgekehrter Drehrichtung A angetrieben, wird die Flüssigkeit im Inneren des Pumpengehäuses 16 in dem Ringraum 22 in eine Rotation in Richtung der Drehrichtung A versetzt. Die Flüssigkeit strömt so nun vorrangig in den Auslasskanalabschnitt 28 ein, während in den Auslasskanalabschnitt 30 weniger bzw. im Wesentlichen keine Strömung gelenkt wird. Dadurch wird die Klappe 34 an ihrer dem Laufrad 18 zugewandten Oberfläche, welche eine Anströmfläche bildet, mit der Strömung beaufschlagt, welche die Klappe 34 um die Schwenkachse S verschwenkt, woraufhin der Hebel 36 gleichzeitig das Ventilelement 48 entlang der Achse Y linear verschiebt, wobei die Dichtfläche 52 von dem Ventilsitz 56 außer Anlage tritt und so den ersten Einlasskanal 46 freigibt. In der Drehrichtung A wird der Antriebsmotor von einer Steuereinrichtung vorzugsweise derart beschleunigt, dass die die Klappe 34 verschwenkende Strömung sich schneller einstellt, als ein in dem Einlasskanal 46 herrschender und auf das Ventilelement 48 wirkender Druck. So wird erreicht, dass das Ventilelement 48 bewegt werden kann, bevor sich ein ausreichender Haltedruck aufbaut. Gleichzeitig tritt die Dichtfläche 50 an dem Ventilsitz 54 in Anlage und verschließt den ersten Einlasskanal 44. So wird nun die Flüssigkeit von dem Pumpenaggregat 12 durch den zweiten Kreis 7 und den Sekundärwärmetauscher 8 gefördert, während der Heizkreis 5 verschlossen ist. Über den Abzweigpunkt 4 überträgt sich jedoch der ausgangsseitige Druck des Pumpenaggregates 12 auch durch den geschlossenen Heizkreis 5 in den ersten Einlasskanal 44, so dass der Druck dort auf die Rückseite der Dichtfläche 50 bzw. auf die Stirnseite des Ventilelementes 48 wirkt. Dadurch wird die Dichtfläche 50 weiter gegen den Ventilsitz 54 gedrückt, welcher sich aufgrund seiner Elastizität um ein gewisses Maß verformt. Dadurch wird das Ventilelement 48 weiter linear verschoben, als es allein durch die Schwenkbewegung der Klappe 34 und des Hebels 36 verschoben wurde. Über die Kopplung wird dabei der Hebel 36 mit bewegt und die Klappe 34 im Wesentlichen aus dem Strömungsweg durch den Auslasskanalabschnitt 30 heraus verschwenkt, so dass der Strömungswiderstand minimiert wird. Wird das Pumpenaggregat ausgeschaltet, fällt der Druck auf die Stirnseite des Ventilelementes 48, welche von der Rückseite der Dichtfläche 50 gebildet wird, weg und die Rückstellfeder 58 bewegt das Ventilelement 48 wieder in die in Fig. 3 gezeigte Ausgangslage zurück.

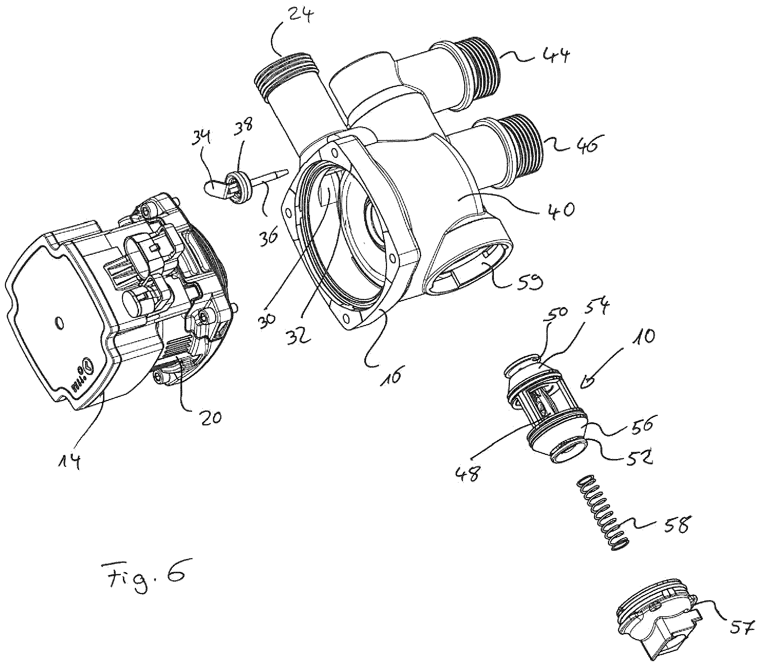

Fig. 6 veranschaulicht die Montage des Pumpenaggregates 12. Das Pumpengehäuse 16 ist einstückig mit dem Ventilgehäuse 40 ausgebildet. Das Ventil 10 ist als Einsatz in das Ventilgehäuse 40 durch eine Öffnung 59 eingesetzt, welche im Anschluss durch einen Deckel 57 verschlossen ist. Die Rückstellfeder 58 stützt sich an einem Ende an dem Ventilelement 48 und am entgegengesetzten Ende an der Innenseite des Deckels 57 ab. Die Klappe 34 mit dem Hebel 36 und der Dichtung 38 kann bei abgenommenen Antriebsmotor 20 durch die dem Antriebsmotor 20 zugewandte Öffnung des Pumpengehäuses 16 eingesetzt werden.

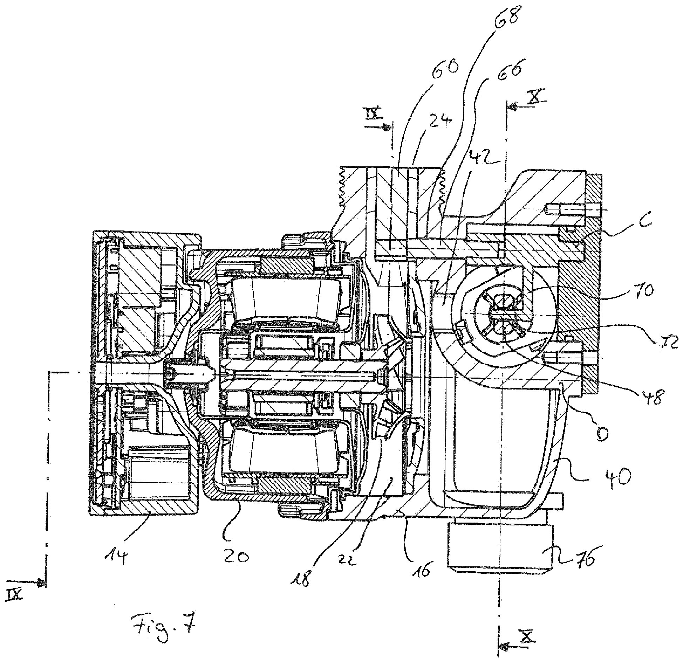

Die Fig. 7 bis 12 zeigen eine Variante des Pumpenaggregates 12, wie es vorangehend beschrieben wurde. In der nachfolgenden Beschreibung wird im Wesentlichen auf die Unterschiede eingegangen.

Die Anordnung des Laufrades 18 in dem Pumpengehäuse 16 mit dem umgebenden Ringraum 22 entspricht der Ausgestaltung in dem vorangehenden Ausführungsbeispiel. In diesem Ausführungsbeispiel weitet sich der Auslasskanal 24 ebenfalls zum Innenraum des Pumpengehäuses 16 hin auf, so dass Auslasskanalabschnitte 28 und 30 gebildet werden, welche jedoch nicht durch eine feste Wand voneinander getrennt sind, sondern durch eine Klappe 60, welche hier als Antriebselement dient. Die Klappe 60 weist eine Anströmfläche 62 an einer Seite und eine zweite Anströmfläche 44 an der entgegengesetzten Seite auf. Dreht sich das Laufrad 18 in der Drehrichtung 17, wird die Strömung hauptsächlich in den Auslasskanalabschnitt 28 gelenkt und strömt die Anströmfläche 64 an, während bei einer Rotation des Laufrades in der Drehrichtung B die Strömung in erster Linie in den Auslasskanalabschnitt 30 gelenkt wird und die Anströmfläche 62 anströmt. Wird die Anströmfläche 62 angeströmt, verschwenkt die Klappe 60 um die Schwenkachse C in der Richtung b. Wenn die Anströmfläche 64 angeströmt wird, wird die Klappe 60 um die Schwenkachse C in der Richtung a verschwenkt.

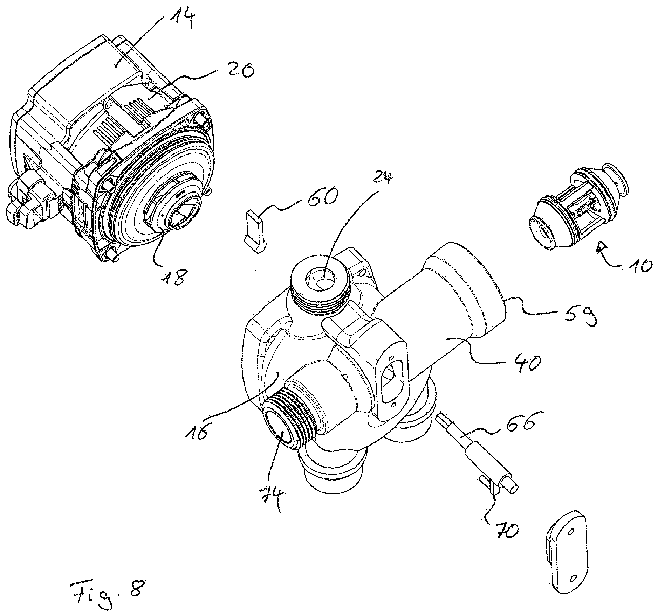

Die Klappe 60 ist drehfest mit einer Welle 66 verbunden, welche sich durch eine Wellendichtung 68 hindurch in das Ventilgehäuse 14 erstreckt. Auf die Wellendichtung 68 kann gegebenfalls verzichtet werden, wenn die Passung in der Durchführung für die Welle 66 entsprechend gewählt ist und/oder gegebenenfalls eine gewisse Undichtigkeit toleriert werden kann. In solch einem Fall wird die Wellendichtung 56 direkt von der Wandung des Pumpengehäuses bzw. des Ventilgehäuses 40 gebildet. Im Ventilgehäuse 14 endet die Welle 66 an einem Hebelarm 70, welcher sich ausgehend von der Welle 66 bezüglich der Schwenkachse C diametral entgegengesetzt zu der Klappe 60 erstreckt. Der Hebelarm 70 greift mit einem Zapfen 72 in das Ventilelement 48 ein. So verschwenkt sich bei Drehung der Klappe 60 ebenfalls der Hebelarm 70, wodurch das Ventilelement 48 in der oben beschriebenen Weise linear verschoben wird. Das Ventil 10 ist auch bei dieser Ausführungsform, wie in Fig. 8 zu sehen ist, als Einsatz 10 ausgebildet, welcher durch die Öffnung 59 in das Ventilgehäuse 40 eingeschoben ist. In diesem Ausführungsbeispiel weist das Ventilgehäuse 40 an dem der Öffnung 59 entgegengesetzten Ende zu Montagezwecken noch einen Anschluss 74 auf, welcher, wie in Fig. 7 gezeigt, durch eine Kappe 76 verschlossen ist.

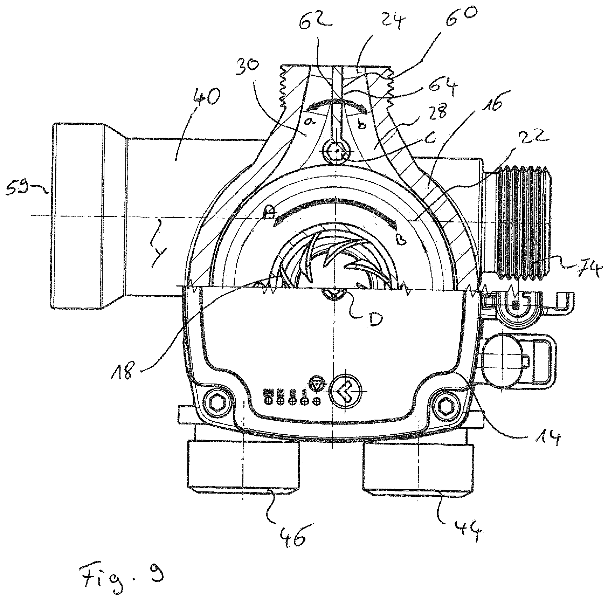

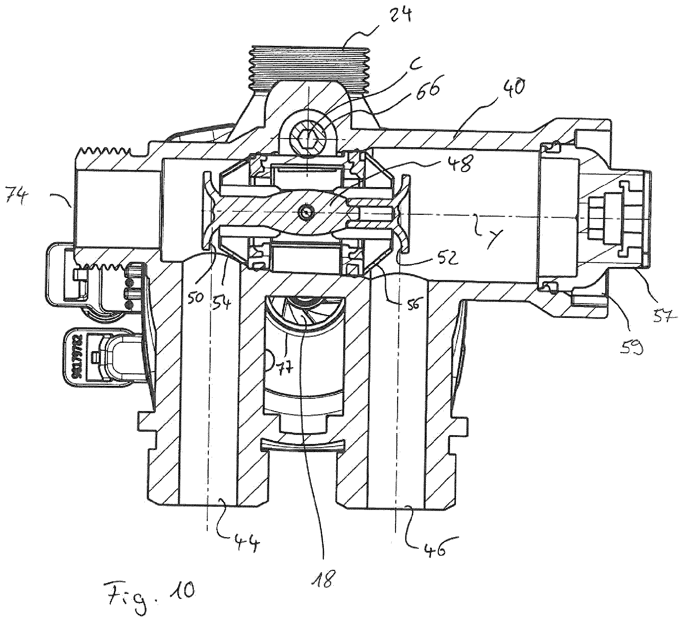

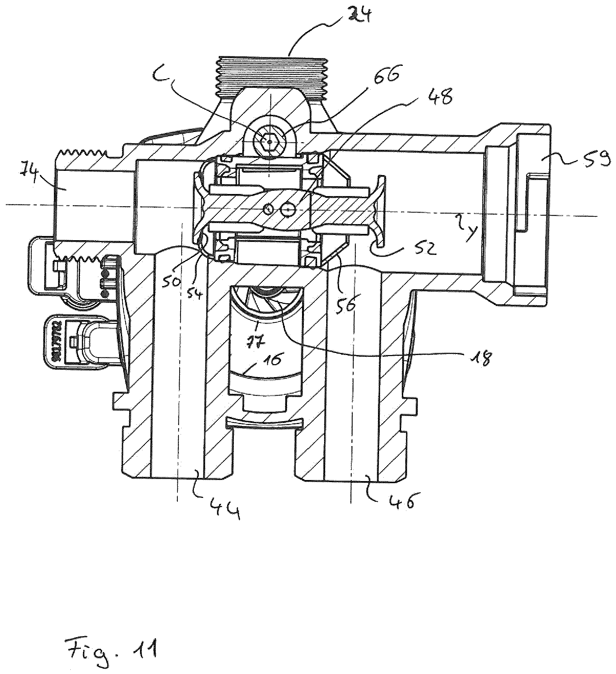

Fig.9 zeigt eine Ruhelage der Klappe 62, in welcher diese sich im Wesentlichen radial zur Drehachse D des Laufrades 18 erstreckt. Es ist zu erkennen, dass auch hier die Klappe 62 wie die Klappe 34 vollständig außerhalb des freien Ringraumes 22 gelegen ist, das heißt mit ihrem radial inneren Ende genauso weit vom Außenumfang des Laufrades 18 beabstandet ist, wie die Innenwandung des Pumpengehäuses 16 im Umfangsbereich des Laufrades 18. In dieser Position befindet sich das Ventilelement 48 des Ventils 10, welches im Wesentlichen wie bei dem ersten Ausführungsbeispiel ausgebildet ist, in der in Fig. 10 gezeigten Mittelstellung, in welcher die Dichtfläche 52 von dem Ventilsitz 56 und die Dichtfläche 50 von dem Ventilsitz 54 abgehoben sind. In dieser Lage sind somit zunächst beide Einlasskanäle 44 und 46 geöffnet. Wird das Laufrad 18 in der Drehrichtung B angetrieben, verschwenkt die Klappe 60 wie beschrieben in der Richtung b, bis sie an der Wandung des Auslasskanals 24 vorzugsweise unter elastischer Verformung zur Anlage kommt. Dadurch wird über den Hebelarm 70 das Ventilelement 18 in die in Fig. 11 gezeigte Schaltstellung verschoben, in welcher die Dichtfläche 50 an dem Ventilsitz 54 in dichtende Anlage kommt. Dadurch wird der Einlasskanal 44, welcher mit dem Heizkreis 5 verbunden ist, geschlossen. Wie oben beschrieben, wirkt nun über den Einlasskanal 44 ebenfalls der ausgangsseitige Druck des Pumpenaggregates 12 auf die Stirnfläche des Ventilelementes 48 an der Rückseite der Dichtfläche 50, so dass das Ventilelement 48 unter elastischer Verformung des Ventilsitzes 54 weiter in axialer Richtung verlagert wird. Wird das Pumpenaggregat ausgeschaltet, federt die Klappe 60 aufgrund einer elastischen Verformung bei Anlage an der Wandung des Auslasskanals 24 wieder zurück. Auch die Entspannung des Dichtsitzes 54 bewirkt eine Rückstellkraft.

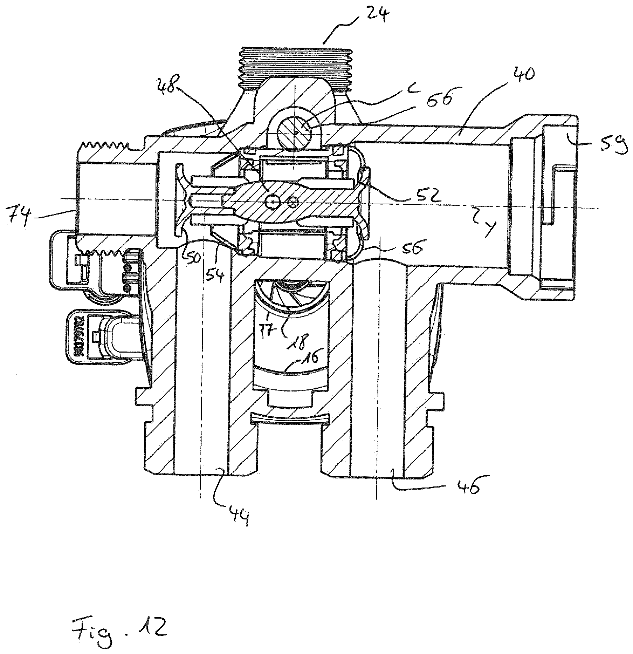

Wenn das Laufrad in entgegengesetzter Drehrichtung A angetrieben wird, verschwenkt die Klappe 60 wie beschrieben in der Richtung a bis sie an der Wandung es Auslasskanals 24 zur Anlage kommt und das Ventilelement 48 wird in die in Fig. 12 gezeigte zweite Schaltstellung bewegt, in welcher die Dichtfläche 50 von dem Ventilsitz 54 abgehoben ist und die Dichtfläche 52 des Ventilelementes 48 an dem Dichtsitz 56 zur Anlage kommt. Dadurch wird der Einlasskanal 46 geschlossen, während der Einlasskanal 44 geöffnet wird. So wird der Strömungsweg durch den Heizkreis 5 geöffnet und der Strömungsweg durch den Kreis 7 und den Sekundärwärmetauscher 8 geschlossen. Nun liegt durch den Kreis 7 der ausgangsseitige Druck an dem Einlasskanal 46 an, so dass dieser auf das axiale Stirnende des Ventilelementes 48 an der Rückseite der Dichtfläche 52 wirkt und die Dichtfläche 52 gegen den Ventilsitz 56 drückt, wobei dieser in der beschriebenen Weise gestaucht wird. So ist auch bei diesem Ausführungsbeispiel stets eine Selbsthaltefunktion des Ventils 10 gegeben, da das Ventilelement 48 zum Schließen stets so bewegt werden muss, dass die Dichtflächen 50, 52 in der jeweiligen Strömungsrichtung bewegt werden, so dass der in Strömungsrichtung in den Einlasskanälen 44 und 46 wirkende Druck jeweils die Dichtflächen in Anlage an dem zugehörigen Ventilsitz 54, 56 hält, wenn der jeweilige Ventilsitz 54, 56 durch die zugehörige Dichtfläche 50, 52 verschlossen wird.

Der Saugmund bzw. Einlauf 77 (siehe Fig. 10 bis 12) des Laufrades 18 weist bei allen hier beschriebenen Ausführungsbeispielen vorzugsweise einen Durchmesser zwischen 12 und 30 mm, weiter bevorzugt zwischen 12 und 25 mm auf, während der Radius r₁ des Laufrades 18 vorzugsweise zwischen 12 und 30 mm liegt.

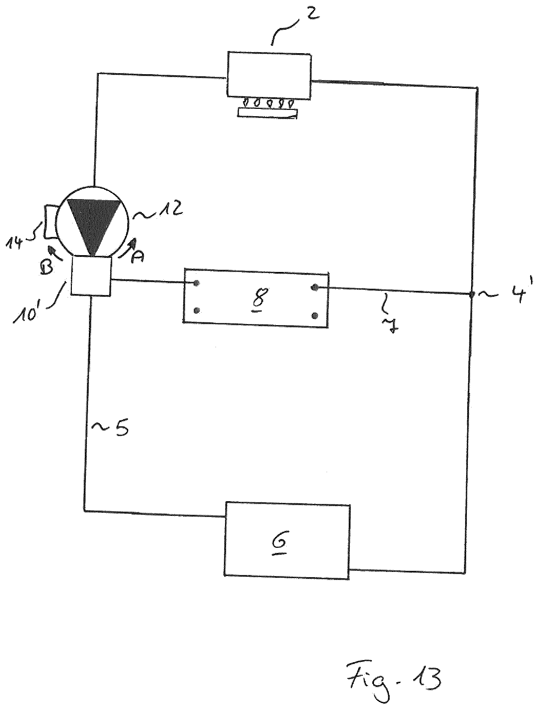

Während in den vorangehenden Beispielen das Ventil 10 an der Saugseite des Pumpenaggregates 12 angeordnet und über ein Antriebselement in Form einer Klappe 34 oder einer Klappe 60, welche an der Druckseite des Pumpenaggregates 12 angeordnet war, betätigt wurde, ist gemäß den nachfolgenden Ausführungsbeispielen, welche anhand der Fig. 13 bis 21 erläutert werden, das Ventil 10' an der Druckseite des Pumpenaggregates 12 angeordnet. Fig. 13 zeigt ein entsprechendes hydraulisches System mit einem solchen Pumpenaggregat 12. Auch hier ist das Pumpenaggregat 12 über seine Steuereinrichtung 14 in zwei verschiedenen Richtungen A und B antreibbar, wobei das Ventil 10' in Abhängigkeit der Drehrichtung A, B den Strömungsweg entweder durch den Heizkreis 5 oder den Strömungsweg durch den Wärmetauscher 8 einschaltet. Bei dieser Ausführungsform verzweigen die beiden Heizkreise 5 und 7 am Ventil 10' und fließen am Abzweigpunkt 4' wieder zusammen und von dort durch den Primärwärmetauscher 2 wieder zu dem Pumpenaggregat 12.

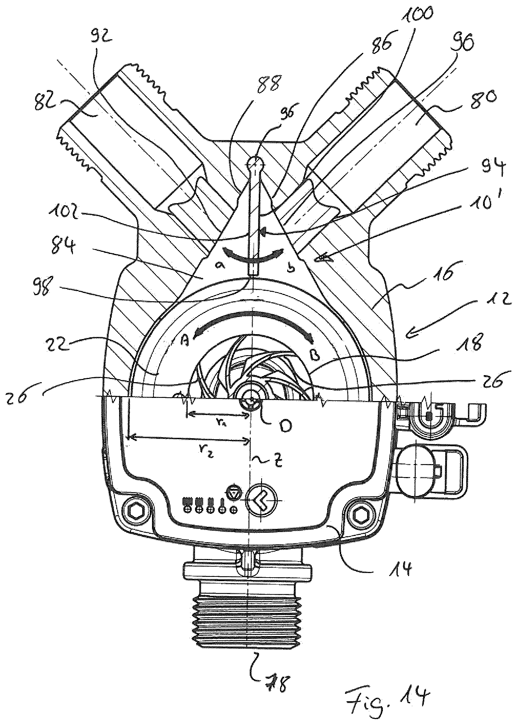

Die Figuren 14 bis 16 zeigen eine erste Ausführungsform eines entsprechend ausgebildeten Pumpenaggregates 12 mit einem Ventil 10'. Die Ausgestaltung des Pumpengehäuses 16 mit dem darin angeordneten Laufrad 18, welches von einem hier nicht gezeigten Antriebsmotor angetrieben wird, entspricht der Ausgestaltung, wie sie anhand von Fig. 2 erläutert wurde. Auch hier ist der Radius r₂ des Innendurchmessers des Pumpengehäuses 16 im Umfangsbereich des Laufrades 18 deutlich größer als der Radius r₁ des Laufrades 18. Hier ist der Radius r₂ ungefähr doppelt so groß wie der Radius r₁. Dadurch wird auch hier ein das Laufrad 18 umgebender freier Ringraum 22 ausgebildet, in welchem sich ein rotierender Flüssigkeitsring ausbilden kann, wenn sich das Laufrad 18 dreht. Auch sind hier die Schaufeln 26 des Laufrades 18 in der Weise gekrümmt, wie es anhand von Fig. 2 erläutert wurde.

Im Unterschied zu den vorangehenden Ausführungsbeispielen weist dieses Pumpenaggregat 12 nur einen Einlasskanal 78 auf, welcher mit dem Saugmund des Laufrades 18 in Verbindung steht. Dafür weist dieses Pumpenaggregat 12 zwei Auslasskanäle 80 und 82 auf. Von dem Auslasskanal 80 ausgehend erstreckt sich der Heizkreis 8 und an den Auslass 82 schließt sich der zweite Kreis 7 durch den Sekundärwärmetauscher 8 an. Die beiden Auslasskanäle 80 und 82 zweigen von einem gemeinsamen Auslassraum 84 ab. Auslassraum 84 ist am Innenumfang des Pumpengehäuses 16 ausgebildet und erstreckt sich radial nach außen. Dabei hat der Auslassraum 84 normal zur Drehachse D des Laufrades 18 eine im Wesentlichen dreieckige Form, wobei er sich ausgehend von seinem dem Laufrad 18 zugewandten Eintrittsende radial nach außen verjüngt. Der Auslassraum 84 liegt außerhalb des Ringraums 22. Der Auslassraum 84 ist darüber hinaus symmetrisch zu einer Mittelachse Z, welche sich normal zur Drehachse D erstreckt, ausgebildet. Die Auslasskanäle 80 und 82 zweigen von zwei einander gegenüberliegenden und im spitzen Winkel zueinander verlaufenden Seitenflächen 86 und 88 ab. Der Auslasskanal 80 hat dabei in der Seitenfläche 86 eine Eintrittsöffnung 90 und der Auslasskanal 82 hat eine Eintrittsöffnung 92 in der Seitenfläche 88. Die Seitenflächen 86 und 88 bilden im Umfangsbereich der Eintrittsöffnungen 90 und 92 einen Ventilsitz. In dem Auslassraum 84 ist darüber hinaus ein Ventilelement in Form einer schwenkbaren Klappe 94 angeordnet. Die Klappe 94 ist aus einem elastisch biegbaren Material ausgebildet und mit Ihrer dem Laufrad 18 abgewandten Endkante 96 im Gehäuse im Berührungsbereich der Seitenflächen 86 und 88 fixiert. Die Klappe 94 kann durch Biegung in den Richtungen a und b in dem Auslassraum 84 verschwenken. Die dem Laufrad zugewandte Endkante 98 der Klappe 94 liegt ebenfalls außerhalb des Ringraumes 22, d. h. ist im Wesentlichen um dasselbe Maß vom Außenumfang des Laufrades 18 beabstandet wie der Innenumfang des Pumpengehäuses 16. D. h. der Abstand zur Drehachse D beträgt ebenfalls im Wesentlichen r₂.

Die zwei einander entgegengesetzten Seitenfläche 100 und 102 der Klappe 94 bilden Anströmflächen, auf welche die von dem Laufrad 18 bei seiner Drehung erzeugte Strömung wirkt. Wenn das Laufrad in der Drehrichtung A rotiert, wirkt die dabei entstehende ebenfalls in Drehrichtung A in dem Ringraum 22 rotierende Flüssigkeit hauptsächlich auf die Anströmfläche 100, so dass die Klappe 94 in Richtung a verschwenkt. Wird das Laufrad 18 in entgegengesetzter Richtung B rotiert, wird eine umfängliche Strömung in dem Ringraum 22 ebenfalls in der Richtung B erzeugt. Diese Strömung tritt so in den Auslassraum 84 ein, dass sie im Wesentlichen auf die entgegengesetzte Anströmfläche 102 wirkt, so dass die Klappe 94 in der Richtung b ausgelenkt wird. Die Auslenkung erfolgt durch Verbiegen der Klappe 94, so dass in der Klappe 94 elastische Rückstellkräfte erzeugt werden, welche die Klappe 94 bei Stillstand des Laufrades 18 wieder zurück in die in Fig. 14 gezeigte Mittel- bzw. Ruhelage bewegen.

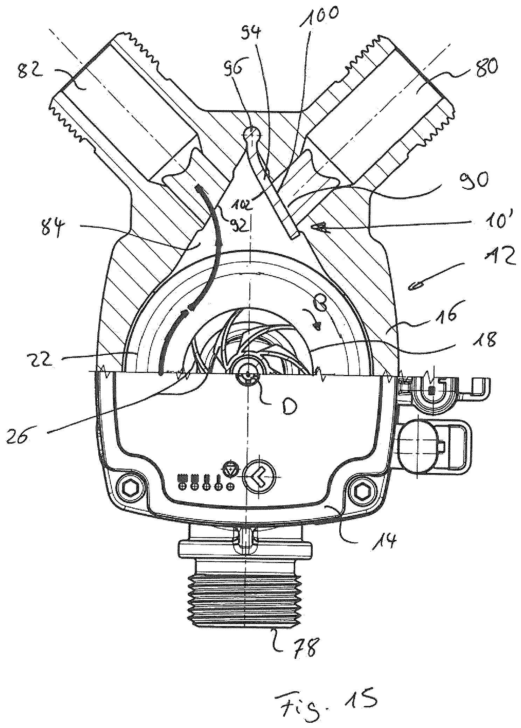

Wenn die Klappe 94 in der Richtung b ausgelenkt ist, wie es in Fig. 15 gezeigt ist, kommt die die Anströmfläche 100 bildende Oberfläche der Klappe 94 am Umfang der Eintrittsöffnung 90 dichtend zur Anlage, so dass die Eintrittsöffnung 90 und damit der Auslasskanal 80 verschlossen werden. So kann bei der Rotation des Laufrades in der Richtung B die Strömung, wie in Fig. 15 angedeutet, aus dem Ringraum 22 in den Auslassraum 84 und über die Eintrittsöffnung 92 in den Auslasskanal 82 eintreten. In diesem Zustand ist somit der Heizkreis 5 geschlossen und das Wasser wird vom Ventil 10' über den zweiten Kreis 7 durch den Sekundärwärmetauscher 8 zur Erwärmung von Brauchwasser geleitet. In diesem Zustand dreht sich das Laufrad 18 entgegen seiner optimierten Richtung, d. h. entgegen der Richtung, für welche die Krümmung der Schaufeln 26 optimiert ist. Durch den großen Ringraum 22 kann dabei der Wirkungsgrad verbessert werden, auch wenn der Wirkungsgrad in diesem Zustand möglicherweise geringer als in der Drehrichtung A, so dass es sich anbietet, diese Drehrichtung für den zweiten Kreis 7 durch den Sekundärwärmetauscher 8 zu nutzen, da dieser Kreis in einer Heizungsanlage zeitlich in deutlich geringerem Umfang betrieben wird als der Heizkreis 5. Gerade bei Betrieb im Teillastbereich ist der Wirkungsgradunterschied zwischen den Drehrichtungen jedoch gering.

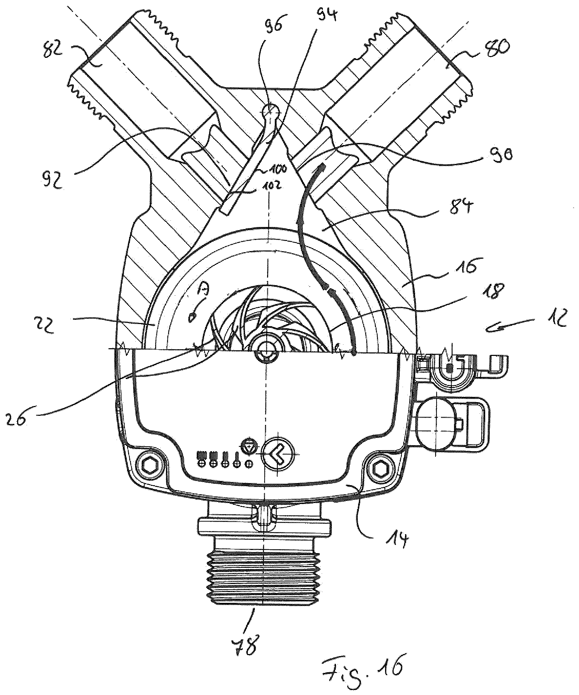

Wird das Laufrad 18 durch entsprechende Ansteuerung des Antriebsmotors in der Drehrichtung A rotiert, wie in Fig. 16 gezeigt ist, verschwenkt die Klappe 94 in der Richtung a, so dass die Oberfläche der Klappe 94, welche die Anströmfläche 102 bildet, am Umfang der Eintrittsöffnung 92 dichtend zur Anlage kommt und die Eintrittsöffnung 92 und damit den Auslasskanal 82 verschließt. Gleichzeitig ist die Eintrittsöffnung 90 und damit der Auslasskanal 80 geöffnet. Die Strömung aus dem Ringraum 22 wird so über den Auslassraum 94 in den Auslasskanal 80 und damit in den sich anschließenden Heizkreis 5 gelenkt, während der zweite Kreis 7 durch den Sekundärwärmetauscher 8 verschlossen ist. In dieser Drehrichtung dreht das Laufrad 18 in seiner bevorzugten Laufrichtung, für welche die Krümmung der Schaufeln 26 optimiert ist, so dass in diesem Zustand ein besonders hoher Wirkungsgrad erreicht wird.

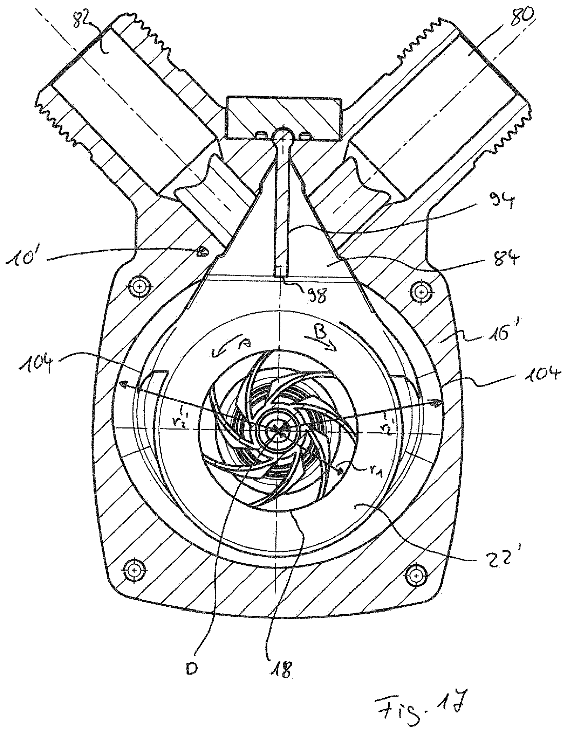

Fig. 17 zeigt ein Pumpengehäuse 16', welches gegenüber dem vorangehend beschriebenen Pumpengehäuse 16 leicht abgewandelt ist. Das Ventil 10' bei der Ausführungsform gemäß Fig. 17 ist in gleicher Weise ausgestaltet, wie anhand der Fig. 14 bis 16 erläutert. Bei der Ausführungsform gemäß Fig. 17 ist lediglich der Ringraum 22' gegenüber dem Ringraum 22, wie er vorangehend beschrieben wurde, abgewandelt. Der Ringraum 22' erstreckt sich nicht über den vollen Umfang des Laufrades 18 mit konstanter Breite, sondern weist an zwei diametral entgegengesetzten Seiten radial vergrößerte Umfangsabschnitte 104 auf, welche an den Auslassraum 84 angrenzen. In diesen radial vergrößerten Umfangsabschnitten 104 beträgt der Radius r₂' des Innenumfanges des Pumpengehäuses 16' im Wesentlichen das zweifache des Radius r₁ des Laufrades 18. In dem diametral entgegengesetzt zu der Auslasskammer 84 gelegenen Umfangsabschnitt des Pumpengehäuses 16' ist der Radius des Innenumfanges des Pumpengehäuses 16' dagegen kleiner. Hier wird somit kein vollständig gleichmäßig erweiterter Ringraum 22 geschaffen. Der Ringraum 22' erweitert sich viel mehr zu dem Auslassraum 84 hin. Wesentlich ist jedoch auch hier, dass das radial innenliegende Ende 98 der Klappe 94 ebenfalls vom Außenumfang des Laufrades 18 beabstandet ist, im Wesentlichen um das gleiche Maß wie die Innenumfangsfläche des Pumpengehäuses 16' in den Umfangsabschnitten 104. Auch bei dieser Ausführungsform mit einem Ringraum 22' mit nicht umfänglich konstant radialer Breite wird eine optimierte Strömung in beiden Drehrichtungen A und B erreicht. Es ist zu verstehen, dass ein in dieser Weise ausgebildetes Pumpengehäuse 16' auch bei allen vorangehend beschriebenen und den nachfolgend beschriebenen Ausführungsbeispielen zur Anwendung kommen könnte.

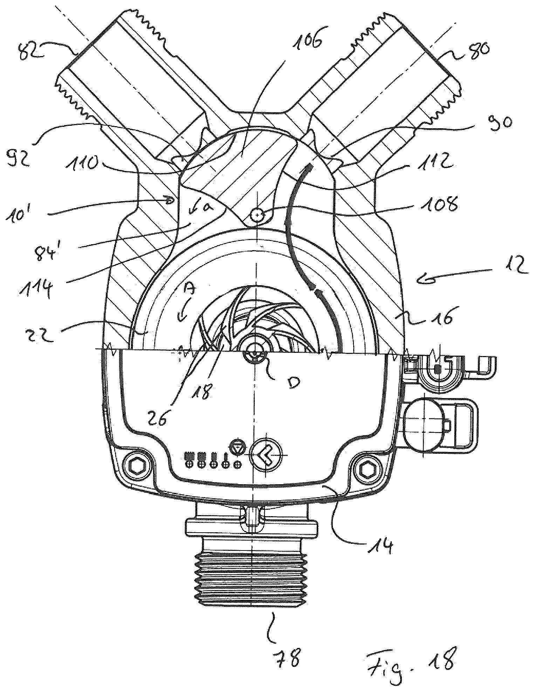

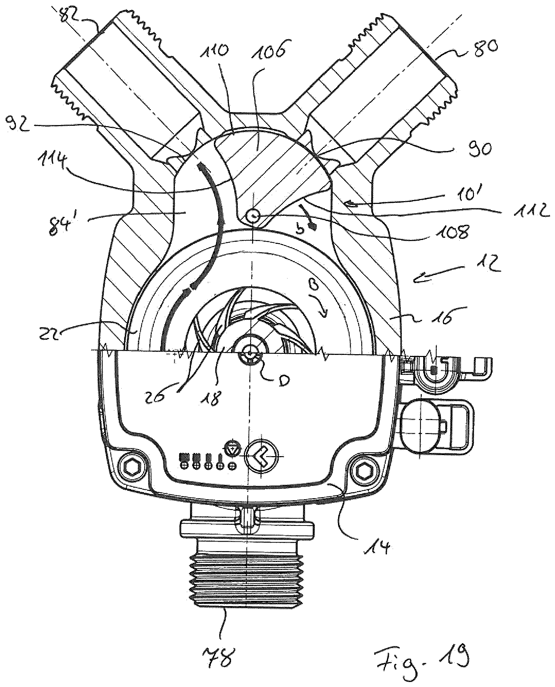

Die Fig. 18 und 19 zeigen eine Abwandlung des Pumpenaggregates 12 gemäß Fig. 13 bis 16. Das Ausführungsbeispiel gemäß Fig. 18 und 19 unterscheidet sich in der Ausgestaltung des Ventils 10'. Das Pumpengehäuse 16, das Laufrad 18 mit den Schaufeln 26 sowie der Ringraum 22 entsprechen der Ausgestaltung, wie sie anhand der Fig. 13 bis 16 erläutert wurden. Insofern wird auf diese Beschreibung verwiesen. Bei dem Ausführungsbeispiel in Fig. 18 und 19 weist der Auslassraum 84' eine etwas abgewandelte Form auf. Er weist keine dreieckige Grundform auf. In dem Auslassraum 84 ist ein im Wesentlichen kreissegmentförmiges bzw. "tortenstückförmiges" Ventilelement 106 angeordnet. Das Ventilelement 106 ist um eine Schwenkachse 108 schwenkbar, welches sich parallel zur Drehachse D des Laufrades 18 erstreckt. Die Schwenkachse 108 liegt dabei an dem in dem Laufrad 18 zugewandten Ende des Ventilelementes 106, d. h. im Wesentlichen an der Spitze der Sektorform. Dabei liegt die Schwenkachse 108 beabstandet zum Außenumfang des Laufrades 18, im Wesentlichen im selben Abstand wie die Innenumfangswandung des Pumpengehäuses 16, d. h. im Wesentlichen um den Radius r₂, beabstandet wie er anhand von Fig. 14 beschrieben wurde.

Das Ventilelement 106 weist eine der Schwenkachse 108 abgewandte im Querschnitt bogenförmige Stirnfläche 110 auf, welche sich konzentrisch zur Schwenkachse 108 erstreckt. Die Stirnfläche 110 bildet, wie nachfolgend beschrieben wird, eine Dichtfläche des Ventilelementes 106. Die Stirnfläche 110 mit dem Bereich der Schwenkachse 108 verbindend weist das Ventilelement 106 zwei einander abgewandte und im spitzen Winkel zueinander verlaufende Seitenflächen 112 und 114 auf. Die Seitenflächen 112 und 114 bilden Anströmflächen und sind im gezeigten Querschnitt quer zur Schwenkachse 108 konkav gekrümmt. So können sie gemeinsam mit den Seitenflächen des Auslassraumes 84' einen gebogenen Strömungskanal bilden. Die Auslasskanäle 80 und 82 weisen an den Auslassraum 84' angrenzende Eintrittsöffnungen 90 und 92 auf, wobei die Eintrittsöffnungen 90 und 92 in einer im Querschnitt bogenförmig verlaufenden Außenwand 116 des Auslassraumes 84' gelegen sind. Die Außenwand 116 hat im Wesentlichen denselben Krümmungsradius wie die Stirnfläche 110 oder erstreckt sich von der Stirnfläche 110 radial beabstandet konzentrisch zu der Schwenkachse 108, so dass die Stirnfläche 110 bei Verschwenken des Ventilelements 106 parallel zu der Außenwand 116 geführt wird. Die Stirnfläche 110 kann im Umfangsbereich der Eintrittsöffnungen 90 und 92 dichtend zur Anlage kommen, um diese zu verschließen.

Fig. 18 zeigt eine erste Schaltstellung des Ventilelementes 106. Diese Schaltstellung wird erreicht, wenn das Laufrad 18 in der Drehrichtung A rotiert. Dann wirkt die erzeugte Strömung auf die Anströmfläche 112, so dass das Ventilelement 106 in der Richtung a so weit verschwenkt wird, dass die Stirnfläche 110 die Eintrittsöffnung 92 verschließt. Gleichzeitig kommt die Stirnfläche 110 von der Eintrittsöffnung 90 außer Deckung, so dass die Eintrittsöffnung 90 freigegeben wird und die Strömung in den Auslasskanal 80 und von diesem in den Heizkreis 5 eintreten kann. Wird das Laufrad 18 in der entgegengesetzten Drehrichtung B gedreht, wie in Fig. 19 gezeigt, wirkt die Strömung auf die Anströmfläche 114 und das Ventilelement 106 wird um die Schwenkachse 108 in Richtung b verschwenkt, so dass die Stirnfläche 110 die Eintrittsöffnung 90 überdeckt und den Auslasskanal 80 verschließt und gleichzeitig die Eintrittsöffnung 92 mit dem Auslasskanal 82 freigibt, so dass die Strömung in den zweiten Kreis 7 durch den Sekundärwärmetauscher 8 gelenkt wird.

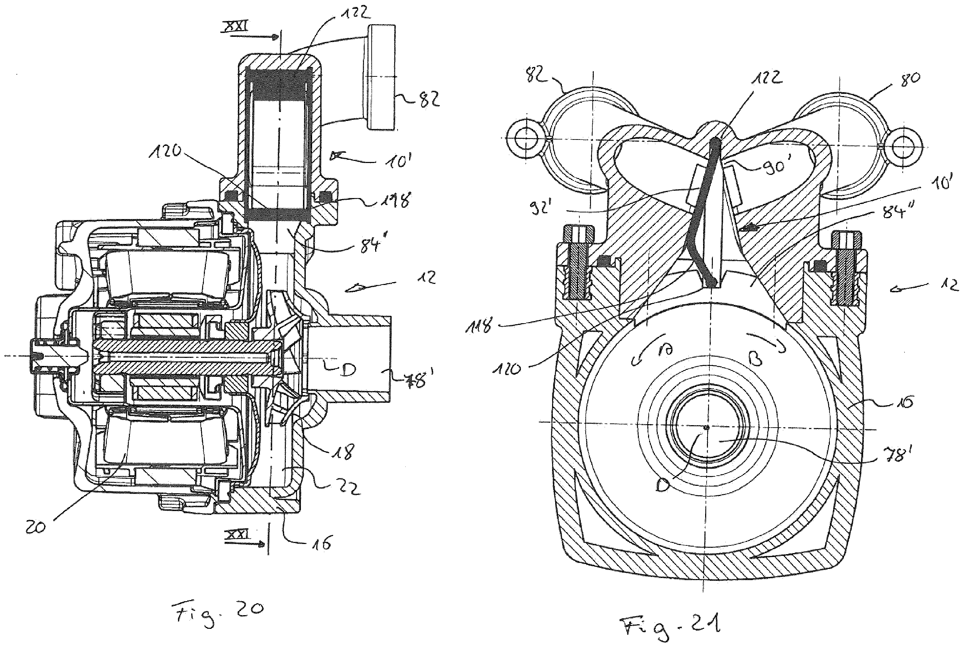

Die Fig. 20 und 21 zeigen eine weitere Variante des Ventils 10' in dem Pumpenaggregat 12. Die grundsätzliche Ausgestaltung entspricht der anhand von den Fig. 13 bis 16 erläuterten Ausgestaltung. Das in den Fig. 20 und 21 gezeigte Pumpenaggregat weist einen Antriebsmotor 20 auf, wie er auch bei den Ausführungsbeispielen 13 bis 19 Verwendung findet, in den dortigen Figuren aber nicht dargestellt ist. Der Antriebsmotor 20 ist mit dem Pumpengehäuse 16 verbunden. In Fig. 20 ist das Elektronikgehäuse bzw. die Steuereinrichtung 14 nicht gezeigt. In dem Pumpengehäuse 16 ist ein Laufrad 18 in gleicher Weise angeordnet, wie anhand von Fig. 13 erläutert, so dass der ringförmige Freiraum 22 im Inneren des Pumpengehäuses 16 ausgebildet wird.

Von der Ausführungsform gemäß Fig. 13 bis 16 unterscheidet sich die in Fig. 20 und 21 gezeigte Ausführungsform in der Form des Auslassraumes 84' und des Ventilelementes, welches hier als elastisches Segel 118 ausgebildet ist. Das Ventilelement 118 ist aus einem elastischen Material gefertigt und erstreckt sich in dem Auslassraum 84" zwischen den Einlassöffnungen 90' und 92' der Auslasskanäle 80 und 82. Die Eintrittsöffnungen 90' und 92' sind ähnlich gelegen wie die Eintrittsöffnungen 90 und 92 in dem vorherigen Ausführungsbeispiel gemäß Fig. 13 bis 16. Das Ventilelement 118 in Form eines elastischen Segels ist sowohl an seinem dem Laufrad 18 zugewandten Ende 120 als auch an seinem dem Laufrad 18 abgewandten Ende 122 festgelegt. Die Oberflächen des Ventilelementes 108 erstrecken sich in Ebenen parallel zur Drehachse D des Laufrades 18. Es hat zwischen den Enden eine derartige Lände, dass es entweder zu der Eintrittsöffnung 92', wie in Fig. 21 gezeigt, umschlagen kann, so dass die Eintrittsöffnung 92' verschlossen ist, oder aber in entgegengesetzter Richtung zu der Eintrittsöffnung 90' hin umschlagen kann, um diese zu verschließen. Das Umschlagen erfolgt jeweils abhängig davon, ob die Strömung durch Rotation des Laufrades 18 in der Drehrichtung A oder in der Drehrichtung B erzeugt wird. Dreht das Laufrad 18 in der Drehrichtung A wird von der erzeugten Strömung das Ventilelement 118 gegen die Eintrittsöffnung 92' gedrückt, so dass diese verschlossen wird und die Strömung durch die Eintrittsöffnung 90' in den Auslasskanal 80 strömt. Dreht das Laufrad in der Drehrichtung B schlägt das Ventilelement 118 durch die auf seine Oberfläche wirkende Strömung um und verschließt so die Eintrittsöffnung 90', wobei die Eintrittsöffnung 92' freigegeben wird und die Srömung in den Auslasskanal 82 strömt.

### Bezugszeichenliste

- 2: Primärwärmetauscher
- 4,4': Abzweigpunkte
- 5: Heizkreis (erster Kreis)
- 6: Heizkörper
- 7: zweiter Kreis für die Brauchwassererwärmung
- 8: Sekundärwärmetauscher
- 10,10': Ventil
- 12: Pumpenaggregat
- 14: Steuereinrichtung, Elektronikgehäuse
- 16, 16': Pumpengehäuse
- 18: Laufrad
- 20: Antriebsmotor
- 22, 22': Ringraum
- 24: Auslasskanal
- 26: Schaufeln
- 28, 30: Auslasskanalabschnitte
- 32: Trennelement
- 34: Klappe
- 36: Hebel
- 38: Dichtung
- 40: Ventilgehäuse
- 42: Verbindung
- 44, 46: Einlasskanäle
- 48: Ventilelement
- 54,56: Ventilsitze
- 57: Deckel
- 58: Rückstellfeder
- 59: Öffnung
- 60: Klappe
- 62, 64: Anströmflächen
- 66: Welle
- 68: Wellendichtung
- 70: Hebel
- 72: Zapfen
- 74: Anschluss
- 76: Kappe
- 77: Saugmund
- 78, 78': Einlasskanal
- 80, 82: Auslasskanäle
- 84, 84', 84": Auslassraum
- 86, 88: Seitenflächen
- 90, 92: Eintrittsöffnungen
- 94: Klappe
- 96, 98: Endkanten
- 100, 102: Anströmflächen
- 104: Umfangsabschnitte
- 106: Ventilelement
- 108: Schwenkachse
- 110: Stirnfläche
- 112, 114: Seitenflächen
- 116: Außenwand
- 118: Ventilelement
- 120, 122: Enden
- A, B: Drehrichtungen
- S₁, S₂: Strömungsrichtungen
- D: Drehachse
- S, C: Schwenkachsen
- Y: Achse
- Z: Mittelachse
- r₁: Radius des Laufrades
- r₂, r₂': Radius des Pumpengehäuses

## Patentansprüche

1. Heizungs-Umwälzpumpenaggregat (12) mit einem Pumpengehäuse (16, 16'), einem in dem Pumpengehäuse (16, 16')drehbar angeordneten Laufrad (18) mit gekrümmten Schaufeln, einem mit dem Laufrad verbundenen elektrischen Antriebsmotor (20), welcher wahlweise in zwei Drehrichtungen (A, B) antreibbar ist, sowie zumindest einem Ventil (10, 10') mit zumindest einem Ventilelement (48; 94; 106; 118), welches von der von dem Laufrad (18) erzeugten Strömung abhängig von der Drehrichtung (A, B) des Laufrades (18) in zwei verschiedene Schaltstellungen bewegbar ist, wobei zwischen dem Außenumfang des Laufrades und dem Pumpengehäuse ein ringförmiger Freiraum (22) dadurch ausgebildet ist, dass ein Radius (r₂; r₂') des Innenumfanges des Pumpengehäuses (16, 16') im gesamten Umfangsbereich des Laufrades (18) zumindest 1,4 mal und vorzugsweise zumindest 2 mal so groß wie der Radius (r₁) des Laufrades (18) ist, wobei in diesen Freiraum keine Teile von Ventilelementen hineinragen.

2. Heizungs-Umwälzpumpenaggregat nach Anspruch 1, **dadurch gekennzeichnet, dass** der Radius (r₂, r₂') des Pumpengehäuses (16, 16') zwischen 1,5 und 3,5 mal so groß und weiter bevorzugt zwischen 1,75 bis 2,25 mal so groß wie der Radius (r₁) des Laufrades (18) ist.

3. Heizungs-Umwälzpumpenaggregat nach Anspruch 1 oder 2, **dadurch gekennzeichnet, dass** ein Umfangsabschnitt (104) im Umfangsbereich des Laufrades an einen Auslassbereich (84; 84; 84") des Pumpengehäuses (16, 16') angrenzt.

4. Heizungs-Umwälzpumpenaggregat nach Anspruch 1 bis 3, **dadurch gekennzeichnet, dass** das Laufrad (18) einen Durchmesser zwischen 25 und 60 mm vorzugsweise mit einem Einlauf-Durchmesser zwischen 12 und 30 mm aufweist.

5. Heizungs-Umwälzpumpenaggregat nach einem der vorangehenden Ansprüche, **dadurch gekennzeichnet, dass** das Laufrad (18) in zwei Richtungen gekrümmte Schaufeln (26) aufweist, wobei die Schaufeln (26) vorzugsweise eine Krümmung aufweisen, welche derjenigen Drehrichtung (A), in welcher das Laufrad (18) überwiegend betrieben wird, angepasst ist.

6. Heizungs-Umwälzpumpenaggregat nach einem der vorangehenden Ansprüche, **dadurch gekennzeichnet, dass** das Ventil (10, 10') zumindest eine im Umfangsbereich des Laufrades (18) gelegene Anströmfläche, vorzugsweise zwei einander abgewandte im Umfangsbereich des Laufrades (18) gelegene Anströmflächen (34; 60; 100; 112, 114) aufweist, welche derart angeordnet ist/sind, dass das Ventilelement (48: 84; 106; 118) durch eine an der Anströmfläche(34; 60; 100; 112, 114) angreifende von dem Laufrad (18) erzeugte Strömungskraft bewegbar ist.

7. Heizungs-Umwälzpumpenaggregat nach Anspruch 6, **dadurch gekennzeichnet, dass** die Anströmfläche (34; 60; 100; 112, 114) derart radial beabstandet zum Außenumfang des Laufrades angeordnet ist, dass ein dem Laufrad (18) zugewandter Endbereich der Anströmfläche (34; 60; 100; 112, 114) vom Außenumfang des Laufrades (18) um ein Maß beabstandet ist, welches mindestens dem radialen Abstand zwischen dem Außenumfang des Laufrades (18) und dem Innendurchmesser des Pumpengehäuses (16; 16') in dem gesamten Umfangsbereich entspricht.

8. Heizungs-Umwälzpumpenaggregat nach einem der vorangehenden Ansprüche, **dadurch gekennzeichnet, dass** das Pumpengehäuse (16) zwei Auslasskanäle (80, 82) aufweist und das Ventil als Umschaltventil zwischen den beiden Auslasskanälen (80, 82) ausgebildet ist.

9. Heizungs-Umwälzpumpenaggregat nach Anspruch 8, **dadurch gekennzeichnet, dass** das Pumpengehäuse (16, 16') in einem Umfangsabschnitt einen gegenüber dem Innendurchmesser radial nach außen erweiterten Auslassraum (84; 84'; 84") aufweist, von welchem zumindest ein und vorzugsweise die beiden Auslasskanäle (80, 82) abzweigen.

10. Heizungs-Umwälzpumpenaggregat nach Anspruch 8 oder 9, **dadurch gekennzeichnet, dass** die beiden Auslasskanäle (80, 82) jeweils eine dem Innenraum des Pumpengehäuses (16; 16') zugewandte Eintrittsöffnung (90, 92) aufweisen und das Ventil zumindest ein bewegliches Ventilelement (94; 106; 118) aufweist, wobei in einer ersten Schaltstellung die Eintrittsöffnung (90) des ersten Auslasskanals (80) und in einer zweiten Schaltstellung die Eintrittsöffnung (92) des zweiten Auslasskanales (82) von einem Ventilelement verschlossen ist.

11. Heizungs-Umwälzpumpenaggregat nach einem der Ansprüche 8 bis 9, **dadurch gekennzeichnet, dass** das Ventilelement (94; 106; 118) um eine Schwenkachse und/oder einen Biegebereich zwischen den beiden Schaltstellungen verschwenkbar ist, wobei die Schwenkachse (C; 108) bzw. der Biegebereich sich vorzugsweise parallel zu einer Drehachse (D) des Laufrades (18) erstreckt.

12. Heizungs-Umwälzpumpenaggregat nach Anspruch 11, **dadurch gekennzeichnet, dass** die Schwenkachse (C; 108) und/oder der Biegebereich an einem dem Laufrad (18) abgewandten oder einem dem Laufrad (18) zugewandten Endbereich des Ventilelementes (94; 106; 118) gelegen ist.

13. Heizungs-Umwälzpumpenaggregat nach Anspruch 11 oder 12, **dadurch gekennzeichnet, dass**
das Ventilelement (106) eine im Querschnitt kreissektorförmige Gestalt aufweist,
sich eine bogenförmige Außenfläche (110) des Ventilelementes (106), welche eine Dichtfläche des Ventilelementes (106) bildet, konzentrisch zu einer Schwenkachse (108) des Ventilelementes erstreckt, und
zwei einander abgewandte in Radiusrichtung verlaufende Seitenflächen (112, 114) des Ventilelementes (106) Anströmflächen bilden.

14. Heizungs-Umwälzpumpenaggregat nach einem der Ansprüche 1 bis 7, **dadurch gekennzeichnet, dass** es zwei Einlasskanäle (44, 46) aufweist und das Ventil als Umschaltventil zwischen den beiden Einlasskanälen (44, 46) ausgebildet ist.

15. Heizungs-Umwälzpumpenaggregat nach Anspruch 14, **dadurch gekennzeichnet, dass** das Ventilelement (48) zu seiner Bewegung mit einem Antriebselement (34; 36; 60; 66) gekoppelt ist, an welchem zumindest eine Anströmfläche (62, 64) ausgebildet ist.

16. Heizungs-Umwälzpumpenaggregat nach Anspruch 14 oder 15, **dadurch gekennzeichnet, dass** Ventil (10) derart ausgebildet ist, dass das zumindest eine Ventilelement (48) an beiden Einlasskanälen (44, 46) jeweils in Strömungsrichtung (S₁, S₂) des jeweiligen Einlasskanales (44, 46) schließt.

17. Heizungs-Umwälzpumpenaggregat nach einem der vorangehenden Ansprüche, **dadurch gekennzeichnet, dass** das Ventilelement (48; 94; 106; 118)eine Ruhelage aufweist, welche vorzugsweise zwischen den beiden Schaltstellungen gelegen ist, und das Ventilelement (48; 94; 106; 118) vorzugsweise mit einem Rückstellmittel (58) versehen ist, welches auf das Ventilelement (48) eine in die Ruhelage gerichtete Rückstellkraft ausübt.

18. Heizungs-Umwälzpumpenaggregat nach Anspruch 17, **dadurch gekennzeichnet, dass** das Ventilelement (94; 118) derart elastisch ausgebildet ist, dass es durch elastische Verformung bei Bewegung in zumindest eine der Schaltstellungen die Rückstellkraft erzeugt.

19. Heizungs-Umwälzpumpenaggregat nach einem der vorangehenden Ansprüche, **dadurch gekennzeichnet, dass** es mit einem nasslaufenden elektrischen Antriebsmotor ausgebildet ist.

20. Hydraulisches System mit zumindest zwei hydraulischen Kreisen, **gekennzeichnet durch** ein Heizungs-Umwälzpumpenaggregat (12) nach einem der vorangehenden Ansprüche, bei welchem das Ventil (10; 10') als Umschaltventil ausgebildet ist, mittels welchem der Strömungsweg für eine von dem Heizungs-Umwälzpumpenaggregat (12) geförderte Flüssigkeit zwischen den beiden hydraulischen Kreisen (5, 7) umschaltbar ist.

## Claims

1. A heating circulation pump assembly (12) with a pump casing (16, 16'), with an impeller (18) with arcuate blades and which is rotatably arranged in the pump casing (16, 16'), with an electrical drive motor (20) which is connected to the impeller and which can be selectively driven in two rotation directions (A, B), as well as with at least one valve (10, 10') with at least one valve element (48; 94; 106; 118) which can be moved by the flow produced by the impeller (18) into two different switch positions depending on the rotation direction (A, B) of the impeller (18), wherein an annular free space (22) is formed between the outer periphery of the impeller and the pump casing, **characterised in that** a radius (r₂; r₂') of the inner periphery of the pump casing (16, 16') in the complete peripheral region of the impeller (18) is at least 1.4 times and preferably at least 2 times as large as the radius (r₁) of the impeller (18), wherein no parts of valve elements project into this free space.

2. A heating circulation pump assembly according to claim 1, **characterised in that** the radius (r₂; r₂') of the pump casing (16, 16') is between 1.5 and 3.5 times as large and further preferably between 1.75 to 2.25 times as large as the radius (r₁) of the impeller (18).

3. A heating circulation pump assembly according to claim 1 or 2, **characterised in that** a peripheral section (104) in the peripheral region of the impeller is adjacent to an outlet region (84; 84; 84") of the pump casing (16, 16').

4. A heating circulation pump assembly according to claim 1 to 3, **characterised in that** the impeller (18) has a diameter between 25 and 60 mm, preferably with a run-in diameter between 12 mm and 30 mm.

5. A heating circulation pump assembly according to one of the preceding claims, **characterised in that** the impeller (18) comprises blades (26) which are arcuate in two directions, wherein the blades (26) preferably have a curvature which is adapted to that rotation direction (A), in which the impeller (18) is predominantly operated.

6. A heating circulation pump assembly according to one of the preceding claims, **characterised in that** the valve (10, 10') comprises at least one onflow surface which is situated in the peripheral region of the impeller (18), preferably two onflow surfaces (34; 60; 100; 112, 114) which are away from one another and situated in the peripheral region of the impeller (18) and which is/are arranged in a manner such that the valve element (48: 84; 106; 118) can be moved by a flow force which engages on the onflow surface (34; 60; 100; 112, 114) and is produced by the impeller (18).

7. A heating circulation pump assembly according to claim 6, **characterised in that** the onflow surface (34; 60; 100; 112, 114) is arranged radially distanced to the outer periphery of the impeller in a manner such that an end region of the onflow surface (34; 60; 100; 112, 114) which faces the impeller (18) is distanced to the outer periphery of the impeller (18) by an amount which corresponds at least to the radial distance between the outer periphery of the impeller (18) and the inner diameter of the pump casing (16; 16') in the complete peripheral region.

8. A heating circulation pump assembly according to one of the preceding claims, **characterised in that** the pump casing (16) comprises two outlet channels (80, 82) and the valve is designed as a switch-over valve between the two outlet channels (80, 82).

9. A heating circulation pump assembly according to claim 8, **characterised in that** the pump casing (16, 16') in a peripheral section comprises an outlet space (84; 84'; 84") which is widened radially outwards with respect to the inner diameter and from which at least one, and preferably both outlet channels (80, 82) branch.

10. A heating circulation pump assembly according to claim 8 or 9, **characterised in that** the two outlet channels (80, 82) each comprise an entry opening (90, 92) which faces the interior of the pump casing (16; 16'), and the valve comprises at least one movable valve element (94; 106; 118), wherein the entry opening (90) of the first outlet channel (80) is closed in a first switch position and the entry opening (92) of the second outlet channel (82) is closed in a second switch position, by a valve element.

11. A heating circulation pump assembly according to one of the claims 8 to 9, **characterised in that** the valve element (94; 106; 118) is pivotable about a pivot axis and/or a bending region, between the two switch positions, wherein the pivot axis (C; 108) or the bending region preferably extends parallel to a rotation axis (D) of the impeller (18).

12. A heating circulation pump assembly according to claim 11, **characterised in that** the pivot axis (C; 108) and/or the bending region is situated at an end region of the valve element (94; 106; 118) which is away from the impeller (18) or which faces the impeller (18).

13. A heating circulation pump assembly according to claim 11 or 12, **characterised in that** the valve element (106) in cross section has a circle-sector-shaped form, an arched outer surface (110) of the valve element (106) which forms a sealing surface of the valve element (106) extends concentrically to a pivot axis (108) of the valve element, and two side surfaces (112, 114) of the valve element (106) which are away from one another and run in the radial direction form onflow surfaces.

14. A heating circulation pump assembly according to one of the claims 1 to 7, **characterised in that** it comprises two inlet channels (44, 46) and the valve is designed as a switch-over valve between the two inlet channels (44, 46).

15. A heating circulation pump assembly according to claim 14, **characterised in that** the valve element (48) for its movement is coupled to a drive element (34; 36; 60; 66), on which at least one onflow surface (62, 64) is formed.

16. A heating circulation pump assembly according to claim 14 or 15, **characterised in that** the valve (10) is designed in a manner such that the at least one valve element (48) connects to both inlet channels (44, 46) each in the flow direction (S₁, S₂) of the respective inlet channel (44, 46).

17. A heating circulation pump assembly according to one of the preceding claims, **characterised in that** the valve element (48; 94; 106; 118) has an idle position which is preferably situated between the two switch positions, and the valve element (48; 94; 106; 118) is preferably provided with a restoring means (58) which exerts a restoring force which is directed into the idle position, upon the valve element (48).

18. A heating circulation pump assembly according to claim 17, **characterised in that** the valve element (94; 118) is designed elastically in a manner such that it produces the restoring force by way of elastic deformation given a movement into at least one of the switch positions.

19. A heating circulation pump assembly according to one of the preceding claims, **characterised in that** it is designed with a wetrunning electrical drive motor.

20. A hydraulic system with at least two hydraulic circuits, **characterised by** a heating circulation pump assembly (12) according to one of the preceding claims, concerning which the valve (10; 10') is designed as a switch-over valve, by way of which the flow path for a fluid delivered by the heating circulation pump assembly (12) can be switched between the two hydraulic circuits (5, 7).

## Revendications

1. Groupe motopompe de circulation pour chauffage (12) comportant un carter de pompe (16, 16'), une roue mobile (18) agencée pour pouvoir tourner dans le carter de pompe (16, 16'), et présentant des pales incurvées, comportant un moteur d'entraînement électrique (20) relié à la roue mobile, lequel peut être entraîné au choix dans deux sens de rotation (A, B), et comportant au moins une soupape (10, 10') avec au moins un élément de soupape (48 ; 94 ; 106 ; 118) qui est déplaçable dans deux positions de commutation différentes par l'écoulement généré par la roue mobile (18) en fonction du sens de rotation (A, B) de la roue mobile (18), dans lequel un espace libre annulaire (22) entre la circonférence extérieure de la roue mobile et le carter de pompe est conçu en ce qu'un rayon (r2 ; r2') de la circonférence intérieure du carter de pompe (16, 16') dans toute la zone circonférentielle de la roue mobile (18) est au moins 1,4 fois, et de préférence au moins 2 fois, plus grand que le rayon (r1) de la roue mobile (18), aucune pièce d'éléments de soupape ne pénétrant dans cet espace libre.

2. Groupe motopompe de circulation pour chauffage selon la revendication 1, **caractérisé en ce que** le rayon (r₂, r₂') du carter de pompe (16, 16') est entre 1,5 et 3,5 fois plus grand, et de manière davantage préférée entre 1,75 à 2,25 fois plus grand, que le rayon (r₁) de la roue mobile (18).

3. Groupe motopompe de circulation pour chauffage selon la revendication 1 ou 2, **caractérisé en ce qu'**une section circonférentielle (104) dans la zone circonférentielle de la roue mobile est adjacente à une zone de sortie (84 ; 84 ; 84") du carter de pompe (16, 16').

4. Groupe motopompe de circulation pour chauffage selon la revendication 1 à 3, **caractérisé en ce que** la roue mobile (18) présente un diamètre entre 25 et 60 mm, de préférence avec un diamètre d'entrée entre 12 et 30 mm.

5. Groupe motopompe de circulation pour chauffage selon l'une des revendications précédentes, **caractérisé en ce que** la roue mobile (18) présente des pales incurvées (26) dans deux directions, dans laquelle les pales (26) présentent de préférence une courbure qui est adaptée au sens de rotation (A) dans lequel la roue mobile (18) est essentiellement exploitée.

6. Groupe motopompe de circulation pour chauffage selon l'une des revendications précédentes, **caractérisé en ce que** la soupape (10, 10') présente au moins une surface d'afflux située dans la zone circonférentielle de la roue mobile (18), de préférence deux surfaces d'afflux (34 ; 60 ; 100 ; 112, 114) situées dans la zone circonférentielle de la roue mobile (18) et opposées l'une à l'autre, qui est(sont) agencée(s) de façon telle que l'élément de soupape (48 : 84 ; 106 ; 118) est déplaçable par une force d'écoulement générée par la roue mobile (18) attaquant la surface d'afflux (34 ; 60 ; 100; 112, 114).

7. Groupe motopompe de circulation pour chauffage selon la revendication 6, **caractérisé en ce que** la surface d'afflux (34 ; 60 ; 100; 112, 114) est agencée en préservant un écart radial à la circonférence extérieure de la roue mobile tel qu'une zone d'extrémité de la surface d'afflux (34 ; 60 ; 100 ; 112, 114) tournée vers la roue mobile (18) est espacée de la circonférence extérieure de la roue mobile (18) d'une mesure qui correspond à au moins la distance radiale entre la circonférence extérieure de la roue mobile (18) et le diamètre intérieur du carter de pompe (16, 16') dans l'ensemble de la zone circonférentielle.

8. Groupe motopompe de circulation pour chauffage selon l'une des revendications précédentes, **caractérisé en ce que** le carter de pompe (16) présente deux canaux de sortie (80, 82) et la soupape est réalisée en tant que soupape de commutation entre les deux canaux de sortie (80, 82).

9. Groupe motopompe de circulation pour chauffage selon la revendication 8, **caractérisé en ce que** le carter de pompe (16, 16') présente, dans une section circonférentielle, un espace de sortie (84 ; 84' ; 84") élargi radialement vers l'extérieur par rapport au diamètre intérieur, duquel bifurquent au moins un et de préférence les deux canaux de sortie (80, 82).

10. Groupe motopompe de circulation pour chauffage selon la revendication 8 ou 9, **caractérisé en ce que** les deux canaux de sortie (80, 82) présentent respectivement une ouverture d'entrée (90, 92) tournée vers l'espace intérieur du carter de pompe (16 ; 16') et la soupape présente au moins un élément de soupape mobile (94 ; 106 ; 118), où dans une première position de commutation, l'ouverture d'entrée (90) du premier canal de sortie (80) et dans une deuxième position de commutation, l'ouverture d'entrée (92) du deuxième canal de sortie (82), est fermée par un élément de soupape.

11. Groupe motopompe de circulation pour chauffage selon l'une des revendications 8 à 9, **caractérisé en ce que** l'élément de soupape (94 ; 106; 118) peut pivoter autour d'un axe de pivotement et/ou d'une zone de flexion entre les deux positions de commutation, l'axe de pivotement (C ; 108) ou la zone de flexion s'étendant de préférence parallèlement à un axe de rotation (D) de la roue mobile (18).

12. Groupe motopompe de circulation pour chauffage selon la revendication 11, **caractérisé en ce que** l'axe de pivotement (C ; 108) et/ou la zone de flexion est situé(e) au niveau d'une zone d'extrémité de l'élément de soupape (94 ; 106 ; 118) opposée à la roue mobile (18) ou tournée vers la roue mobile (18).

13. Groupe motopompe de circulation pour chauffage selon la revendication 11 ou 12, **caractérisé en ce que** l'élément de soupape (106) présente une forme de section transversale en forme d'arc de cercle, une surface extérieure en forme d'arc (110) de l'élément de soupape (106), qui forme une surface étanche de l'élément de soupape (106), s'étend de façon concentrique par rapport à un axe de pivotement (108) de l'élément de soupape, et deux surfaces latérales (112, 114) de l'élément de soupape (106) s'étendant de manière opposée l'une à l'autre dans la direction radiale forment des surfaces d'afflux.

14. Groupe motopompe de circulation pour chauffage selon l'une des revendications 1 à 7, **caractérisé en ce qu'**il présente deux canaux d'entrée (44, 46) et **en ce que** la soupape est réalisée en tant que soupape de commutation entre les deux canaux d'entrée (44, 46).

15. Groupe motopompe de circulation pour chauffage selon la revendication 14, **caractérisé en ce que** l'élément de soupape (48) est couplé pour son déplacement avec un élément d'entraînement (34 ; 36 ; 60 ; 66) au niveau duquel est formée au moins une surface d'afflux (62, 64).

16. Groupe motopompe de circulation pour chauffage selon la revendication 14 ou 15, **caractérisé en ce que** la soupape (10) est réalisée de telle sorte que l'élément de soupape (48), au moins au nombre de un, se ferme au niveau des deux canaux d'entrée (44, 46) respectivement dans le sens d'écoulement (S₁, S₂) du canal d'entrée respectif (44, 46).

17. Groupe motopompe de circulation pour chauffage selon l'une des revendications précédentes, **caractérisé en ce que** l'élément de soupape (48; 94 ; 106; 118) présente une position de repos, qui est située de préférence entre les deux positions de commutation, et l'élément de soupape (48; 94; 106; 118) est doté de préférence d'un moyen de rappel (58), qui exerce sur l'élément de soupape (48) une force de rappel dirigée vers la position de repos.

18. Groupe motopompe de circulation pour chauffage selon la revendication 17, **caractérisé en ce que** l'élément de soupape (94; 118) est réalisé de manière élastique, de sorte qu'il génère la force de rappel par déformation élastique lors du déplacement dans au moins une des positions de commutation.

19. Groupe motopompe de circulation pour chauffage selon l'une des revendications précédentes, **caractérisé en ce qu'**il est réalisé avec un moteur d'entraînement électrique immergé.

20. Système hydraulique comportant au moins deux circuits hydrauliques, **caractérisé par** un groupe motopompe de circulation pour chauffage (12) selon l'une des revendications précédentes, dans lequel la soupape (10; 10') est réalisée en tant que soupape de commutation au moyen de laquelle le trajet d'écoulement d'un liquide transporté par le groupe motopompe de circulation pour chauffage (12) peut être commuté entre les deux circuits hydrauliques (5, 7).
